# EUROPEAN PATENT SPECIFICATION

(11) **EP 3 711 184 B1**
(45) Date of publication and mention of the grant of the patent: **31.12.2025**
(21) Application number: 18812285.7
(22) Date of filing: 15.11.2018
(51) Int. Cl.: H04B 7/06, H04W 74/04, H04W 68/00, H04W 68/02, H04W 74/0833

(54) **RESPONSE BEAM AGGREGATION FOR PAGING ON HIGHER CARRIER FREQUENCIES IN NR**
ANTWORTSTRAHLAGGREGATION FÜR FUNKRUF AUF HÖHEREN TRÄGERFREQUENZEN IN NR
AGRÉGATION DE FAISCEAUX DE RÉPONSE POUR RADIOMESSAGERIE SUR DES FRÉQUENCES PORTEUSES SUPÉRIEURES DANS NR

(30) Priority: 16.11.2017 US 201762587364 P
(43) Date of publication of application: 23.09.2020
(73) Proprietor: Telefonaktiebolaget LM Ericsson (PUBL), 164 83 Stockholm (SE)
(72) Inventor: RUNE, Johan, SE-181 29 Lidingö (SE); PERSSON, Claes-Göran, 595 95 Mjölby (SE)
(74) Representative: Zacco Sweden AB
(86) International application number: PCT/IB2018/058992
(87) International publication number: WO 2019/097441

(56) References cited:
- WO-A1-2017/034509
- WO-A1-2017/034607
- WO-A1-2017/222309
- US-A1- 2017 111 094
- CONVIDA WIRELESS: "UE Assisted Paging", vol. RAN WG2, no. Prague, Czech Republic; 20171009 - 20171013, 8 October 2017 (2017-10-08), XP051343410, Retrieved from the Internet <URL:http://www.3gpp.org/ftp/Meetings_3GPP_SYNC/RAN2/Docs/> [retrieved on 20171008]
- ASTRI ET AL: "Discussion on response beam selection in indication-based paging", vol. RAN WG2, no. Prague, Czech Republic; 20171009 - 20171013, 8 October 2017 (2017-10-08), XP051342997, Retrieved from the Internet <URL:http://www.3gpp.org/ftp/Meetings_3GPP_SYNC/RAN2/Docs/> [retrieved on 20171008]

## Description

### BACKGROUND

An important property of the coming 5G system (e.g. NR) is the usage of high carrier frequencies such as, for example, those in the range of 6 to 100 GHz. For such high frequency spectrum, the atmospheric, penetration and diffraction attenuation properties can be much worse than for lower frequency spectrum. In addition, the receiver antenna aperture, which is a metric describing the effective receiver antenna area that collects the electromagnetic energy from an incoming electromagnetic wave, is inversely proportional to the frequency. Thus, in higher frequency spectrum, the link budget is worse for the same link distance even in a free space scenario if omnidirectional receive and transmit antennas are used. This motivates the usage of beamforming to compensate for the loss of link budget in high frequency spectrum. This is particularly important when communicating with user equipments (UEs) with poor receivers such as, for example, low cost/low complexity UEs. Other means for improving the link budget include repetition of the transmissions to allow wide beam or omnidirectional transmission or use of Single Frequency Network (SFN) transmission from multiple TRPs in the same or different cells.

Due to the above described properties, in the high frequency bands, many downlink signals, such as synchronization signals, system information, and paging, which do not just target a single UE with known location/direction and need to cover a certain area such as, for example, a cell, are expected to be transmitted using beam sweeping. Beam sweeping includes transmitting the signal in one beam at a time, sequentially changing the direction and coverage area of the beam until the entire intended coverage area has been covered by the transmission.

Such a transmission scheme may be used for paging, which is an essential function in a mobile telecommunications system. It is used by the network to contact a UE, primarily in order to transmit downlink data to the UE after the UE has responded to the page. Paging can also be used to inform UEs of updates of the system information in a cell. It can also be used for informing UEs of an ongoing public warning such as ETWS.

In LTE, a UE in RRC_IDLE state camps on a cell and while camping monitors the paging channel associated with that cell. The UE is configured to monitor repeatedly occurring paging occasions (POs) and may reside in a DRX sleep mode in between the paging occasions. When the UE is paged at such a paging occasion, the paging is indicated on the PDCCH in the form of a DL scheduling allocation addressed to the P-RNTI, which is shared by all UEs. This DL scheduling allocation indicates the DL transmission resources on the PDSCH where the actual paging message is transmitted. A UE in RRC_IDLE state, which receives a DL scheduling allocation addressed to the P-RNTI at one of the UE's paging occasions, receives and reads the paging message from the allocated DL transmission resources to find out whether the paging message is intended for the UE. The UE(s) that is (are) subject to the paging is (are) indicated in the paging message through one or more UE paging identifiers (S-TMSI or IMSI), wherein each UE paging identifier is include in a paging record. Up to sixteen UEs may be addressed. As such, there may be up to sixteen paging records in one paging message.

As mentioned above, in NR, paging has to be transmitted using beamforming transmission on high carrier frequencies such as, for example, above 6 GHz. Thus, beam sweeping (with up to 64 beams in the currently specified highest frequency bands) has to be used to cover an entire cell with the page. This creates a lot of control signalling overhead, especially since the paging signals typically have to be transmitted in multiple cells.

To reduce the control signalling overhead associated with paging on higher carrier frequencies, a group paging concept has been proposed in 3GPP where the paging identifier is associated with multiple UEs or a group of UEs. The size of the initial DL message over the radio interface in the paging procedure is kept smaller by means of a shorter paging identifier (compared to using a full UE paging identifier as e.g. 5G-S-TMSI, S-TMSI or IMSI) also known as a group paging identifier. A UE receiving a paging message containing its group paging identifier need to contact the network to find out whether it is actually being paged or not. This concept is also known as response-driven paging.

In NR, paging can be used for a UE in either RRC_IDLE state or RRC_INACTIVE state. The RRC_INACTIVE state is a new state introduced in NR and which is now also supported in EUTRAN (i.e. LTE) if the UE is connected to the 5G core network (5GC). In this state, the Core Network (CN) still regards the UE as connected. Thus, the CN-RAN connection is kept active though the RRC connection between the gNB and the UE is released. When the CN has user data or control data to send to the UE, the data is sent to the anchor gNB which then initiates the paging of the UE (a.k.a. a RAN initiated page). In RRC_INACTIVE, the UE sends a periodic RAN Area Update to the network. However, the UE can move around in a RAN Notification Area (RNA) configured by the network without informing the network of its location within the RNA. When the UE leaves its configured RNA, the UE informs the network. In the former case, the paging is initiated by CN. By contrast, in the latter case, the paging is initiated by the RAN such as by an anchor gNB where the UE's RAN context is stored.

There currently exist certain challenge(s). Specifically, with the response-driven paging concept, shorter paging identifiers may be used. The shorter paging identifiers may be referred to as Paging Indicators (Pis), and multiple UEs may be addressed with one and the same PI. When a UE receives the initial downlink message containing the paging indication and a matching Pl, the UE does not know whether it is actually being paged or if another UE with the same allocated PI is the actual target of the page. To resolve this ambiguity, the UE needs to contact the network, which, in turn, will transmit the additional paging information (i.e. the full UE paging identifier(s)) to the UE in a DL beam.

The response-driven paging concept reduces the amount of data initially transmitted by the network in the paging beam sweep, but it does so at the expense of increased signalling in the uplink and in the downlink following the paging beam sweep containing the paging indication and the PI. Solutions for reducing the signaling overhead in the downlink beam following the initial paging beam sweep are needed.

A solution is proposed in R2-l 710985, Discussion on response beam selection in indication-based pa0·ng, ASTRI, TCL Communication Ltd, RAN2#99bis, 9th - 13th October 2017, as elaborated on later herein.

R2-1711425, UE Assisted Paging, Convida Wireless, RAN2#99bis, 9th - 13th October 2017, proposes that pa0in0 assistance information could explicitly indicate which beam the UE could receive.

### Summary

The invention is defined by the independent claims. Further, embodiments of the invention are defined by the claims. Moreover, examples, embodiments and descriptions, which are not covered by the claims are presented not as embodiments of the invention, but as background art or examples useful for understanding the invention. Certain aspects of the present disclosure and their embodiments may provide solutions to these or other challenges.

According to certain embodiments, a method by a wireless device for reporting acceptable downlink (DL) beam directions to a network node is provided. The method includes identifying a plurality of acceptable DL beam directions. An indicator of the plurality of acceptable DL beam directions is transmitted to the network node. Paging information is received from the network node on one of the DL beam directions in the plurality of acceptable DL beam directions.

According to certain embodiments, a wireless device for reporting acceptable DL beam directions to a network node is provided. The wireless device includes memory and processing circuitry operable to execute the instructions to cause the wireless device to identify a plurality of acceptable DL beam directions. An indicator of the plurality of acceptable DL beam directions is transmitted to the network node. Paging information is received from the network node on one of the DL beam directions in the plurality of acceptable DL beam directions.

According to certain embodiments, a method by a network node for determining acceptable DL beam directions in which to transmit a message to one or more wireless devices. The method includes receiving an indicator from the one or more wireless devices. Based on the indicator from the one or more wireless devices, a plurality of acceptable DL beam directions for transmitting paging information to the one or more wireless devices is determined. A response message containing the paging information is transmitted to the one or more wireless devices in one of the DL beam directions in the plurality of acceptable DL beam directions.

According to certain embodiments, a network node for determining acceptable DL beam directions in which to transmit a message to one or more wireless devices is provided. The network node includes memory and processing circuitry operable to execute the instructions to cause the network node to receive an indicator from the one or more wireless devices. Based on the indicator from the one or more wireless devices, a plurality of acceptable DL beam directions for transmitting paging information to the one or more wireless devices is determined. A response message containing the paging information is transmitted to the one or more wireless devices in one of the DL beam directions in the plurality of acceptable DL beam directions.

Certain embodiments may provide one or more of the following technical advantage(s). As an example, an advantage of certain embodiments may reduce the amount of response beams transmitted by the network to convey the list of full UE identifier(s) to the wireless device responding to the paging beam sweep containing the paging indication and the PI.

Certain embodiments may include none, some, or all of these advantages. Certain embodiments may include other advantages, as would be understood by a person having ordinary skill in the art.

### BRIEF DESCRIPTION OF THE DRAWINGS

For a more complete understanding of the disclosed embodiments and their features and advantages, reference is now made to the following description, taken in conjunction with the accompanying drawings, in which:
FIGURE 1 illustrates an exemplary network for response beam aggregation for paging on higher carrier frequencies, according to certain embodiments;
FIGURE 2 illustrate an example wireless device for reporting a set of acceptable downlink (DL) beam directions to a network node, according to certain embodiments;
FIGURE 3 illustrates an example method by a wireless device for reporting a set of acceptable DL beam directions to a network node, according to certain embodiments;
FIGURE 4 illustrates an example virtual computing device for reporting a set of acceptable DL beam directions to a network node, according to certain embodiments;
FIGURE 5 illustrates another example method by a wireless device for reporting a set of acceptable DL beam directions to a network node, according to certain embodiments;
FIGURE 6 illustrates another example virtual computing device for reporting a set of acceptable DL beam directions to a network node, according to certain embodiments;
FIGURE 7 illustrates an exemplary network node for minimizing the number of DL beam directions in which to transmit a message to one or more wireless device, according to certain embodiments;
FIGURE 8 illustrates an exemplary method by a network node for minimizing the number of DL beam directions in which to transmit a message to one or more wireless devices, according to certain embodiments;
FIGURE 9 illustrates another example virtual computing device for minimizing the number of DL beam directions in which to transmit a message to one or more wireless devices, according to certain embodiments;
FIGURE 10 illustrates another exemplary method by a network node for minimizing the number of DL beam directions in which to transmit a message to one or more wireless devices, according to certain embodiments;
FIGURE 11 illustrates another exemplary virtual computing device for minimizing the number of DL beam directions in which to transmit a message to one or more wireless devices, according to certain embodiments;
FIGURE 12 illustrates an exemplary radio network controller or core network node, according to certain embodiments;
FIGURE 13 illustrates a telecommunication network connected via an intermediate network to a host computer, according to certain embodiments;
FIGURE 14 illustrates a host computer communicating via a base station with a user equipment over a partially wireless connection, according to certain embodiments;
FIGURE 15 illustrates a method implemented in a communication system, in accordance with one embodiment;
FIGURE 16 illustrates another method implemented in a communication system, in accordance with one embodiment;
FIGURE 17 illustrates another method implemented in a communication system, in accordance with one embodiment; and
FIGURE 18 illustrates another method implemented in a communication system, in accordance with one embodiment.

### DETAILED DESCRIPTION

As discussed above, in NR, paging has to be transmitted using beamforming transmission on high carrier frequencies. Thus, beam sweeping is used to cover an entire cell with the page. This creates a lot of control signalling overhead, especially since the paging signals typically have to be transmitted in multiple cells.

To reduce the control signalling overhead associated with paging on higher carrier frequencies, a group paging concept has been proposed where the paging identifier is associated with multiple UEs or a group of UEs (referred to as Paging Indicator, PI). The PI could be based on a truncated UE ID (e.g. S-TMSI, 5G-S-TMSI or IMSI), or a group ID assuming the UE has been associated with such a group at an earlier stage. A truncated UE identifier refers to an UE identifier from which some of the bits have been removed. Bits could be removed from either end of the UE identifier, e.g. removing some of the least significant bits or some of the most significant bits, but bits can also be removed from the middle of the UE identifier (keeping only the most significant bits and the least significant bits) or from both ends of the UE identifier, i.e. removing some of the most significant bits and some of the least significant bits. The PI could also be based on a hash applied to the UE ID (e.g. S-TMSI, 5G-S-TMSI or IMSI), or a bit position in a bitmap.

When the UE receives the initial DL message containing the paging indication and a matching PI, the UE does not know for sure if it is actually being paged or not. To resolve this ambiguity, the UE need to contact the network for additional paging information (i.e. for the full UE paging identifier(s)). Since the PI is not UE unique and thus ambiguous, multiple UEs, many of which not being the target of the paging, may respond to a paging indication. The number of responding UEs in the cell depends on several factors such as, for example, the size of the PI in relation to a full UE paging identifier and the number of UEs listening to the Paging Occasion in which the paging indication and the matching PI is sent.

The UE response is either performed by a regular random access procedure (as described in R2-168124, Paging in NR at HF operation, Nokia, Alcatel-Lucent Shanghai Bell, RAN2#96, 14th - 18th November 2016 and R2-1702779, Configurable Paging Procedure for NR, Nokia, Alcatel-Lucent Shanghai Bell, RAN2#97bis, 3rd - 7th April 2017, as disclosed below, or by a modified random access procedure whereby the UE transmits a special random access preamble to indicate a detected PI match (as described in R2-1708537, Response-driven paging to reduce beam sweeping overhead in NR, Ericsson, RAN2#98, 15th - 19th May 2017 and WO 2018/130896). The response from the UE will trigger the network to send the additional paging information (full UE paging identifier(s)) to the UE.

As a side-effect of the UE response, the network is also informed of the direction in which the responding UE can be reached. The UE implicitly "reports" its preferred DL beam direction by selecting a PRACH resource which is associated with the selected beam. The mapping between a DL beam and a PRACH resource is indicated in the SS Block transmissions in the cell together with PRACH configuration information in additional broadcasts of system information. An SS Block is a beam swept (in high frequencies) signal block consisting of the synchronization signals Primary Synchronization Signal (PSS) and Secondary Synchronization Signal (SSS) together with a small amount of essential system information in the form of a Master Information Block (MIB) transmitted on the Physical Broadcast Channel. Based on the information provided in these transmissions, a beam index, or time indication (which unambiguously can be translated into a beam index) can be derived. Beam swept paging are assumed to be transmitted using the same DL beams (or beam directions) as the beam swept SS Block transmissions in the same cell. Hence, the PRACH resources that are used for the preamble transmission indicates the DL beam on which the UE wants to receive the requested additional paging information.

In some scenarios, a group of DL beams may be associated with the same PRACH resource, and the beams within the group may be distinguished by different preambles. To achieve this, different sets of preambles are associated with different beams within a group of beams associated with the same PRACH resource. From the set associated with a beam, a UE may randomly select a preamble to be used for a regular random access. In other words, multiple SS Block beams, e.g. a group of SS Block beams, may be associated with the same PRACH resource. For instance, in a scenario with a total of sixteen SS Block beams in a cell, these SS Block beams could be divided into four groups of four SS Block beams each. Each of these groups of SS Block beams could then be associated with a separate PRACH resource. Hence, the PRACH resource a UE uses for a preamble transmission indicates to the gNB to which group of DL beams the UE's preferred DL beam belongs. To enable the UE to indicate which of the beams in this group that is the best, each beam within a group of beams is associated with a different set of preambles (to be used for random access), so that the preamble the UE transmits indicates which of the beams within the group of beams that is the best, based on the set of preambles the transmitted preamble belongs to. Hence, the PRACH resource used for the preamble transmission indicates a group of DL beams and the transmitted preamble (based on the set of preambles it is chosen from) indicates a certain beam within the group of DL beams. Note that the different sets of preambles associated with the beams within a group of DL beams may be reused in every group of DL beams, since the group of DL beams is indicated by the PRACH resource.

The number of UEs responding to a matching PI may be substantial, causing the network to transmit the additional paging information in so many beam directions that this overhead becomes significant, thus reducing the gain of the response-driven paging concept. The number of beam directions the network, e.g. a gNB, has to transmit the additional paging information in depends on the number of UEs that monitor a certain paging occasion, the fraction of the monitoring UEs which find a matching PI in the paging indication (which in turn depends on the size of the PI in relation to the size of a full UE paging identifier), and the location(s) of the responding UE(s) in the cell. In a worst-case scenario, the responding UEs might be distributed in all beam sectors of the cell, forcing the network to send a response message in each beam direction covering the complete cell.

A solution is proposed in R2-1710985, Discussion on response beam selection in indication-based paging, ASTRI, TCL Communication Ltd, RAN2#99bis, 9th - 13th October 2017, aiming to reduce the number of DL beams used for transmission of the additional paging information. This is achieved through a scheme, which tends to gather the reported preferred DL beam directions in a few selected "prioritized" directions. The essence of the proposed scheme is that a UE does not only identify its preferred DL beam, but all DL beams that are acceptable according to a given threshold, i.e. which are good enough for reception of additional paging information. If any of the acceptable beams is a prioritized beam, the prioritized beam is reported to the network, irrespective of whether it is the best beam or not. This creates a bias towards reporting prioritized beams and hence the responding UEs should with the proposal in R2-1710985 report fewer beams in total (i.e. together), thereby reducing the number of DL beam directions the network has to transmit the additional paging information in. A solution with this property may be referred to as "response beam aggregation". Note that with the solution in R2-1710985 the UE potentially identifies multiple acceptable beams, but it only reports one of them.

Although the solution disclosed in R2-1710985 does achieve some reduction of the number of beams through response beam aggregation (i.e. using a single beam to reach more than one UE), the solution has shortcomings that makes it miss opportunities for response beam aggregation and causes it to fail to leverage the full potential of overlaps in the responding UEs' respective sets of acceptable beams. For instance, two responding UEs with overlapping sets of acceptable DL beams could be "pulled" to different prioritized beams for their respective response, with the result that the overlap is invisible for the gNB and no response beam aggregation is achieved. A similar effect may result if a UE's set of acceptable beams does not include any prioritized beam, in which case the UE instead has to report the best beam in the set. Another disadvantage appears in a scenario where a single UE reports (through its response to the beam swept paging indication) a certain prioritized beam and this beam is not the best beam for the UE (albeit an acceptable beam). The gNB will then transmit the additional paging information to the UE in the reported prioritized beam direction. As a result, the UE receives the additional paging information in a suboptimal beam and yet no response beam aggregation is achieved.

To avoid failure to leverage overlaps in different UEs' sets of acceptable beams, because the overlaps are hidden to the network, a different approach may be that, according to certain embodiments proposed herein, each responding UE reports its actual set of acceptable DL beams, so that the network can identify the response beam aggregation choice that minimizes the number of response beams. Such a set of acceptable DL beams is herein referred to as an Acceptable DL Beam set. An Acceptable DL Beam set thus consists of a set of DL beams in which the UE can receive the response beam from the network. In other words, the UE can receive the response beam in any of the indicated DL beams in the Acceptable DL Beam set. The definition of what an acceptable DL beam is may be standardized or configured in the system information in the cell. The definition could e.g. be that the quality or received power of the beam exceeds a certain threshold. Suitable power and/or quality measures include e.g. RSRP, RSRQ, SNR and SINR.

To enable reporting of a UE's Acceptable DL Beam set, a set of preambles could be reserved for indicating different sets in relation to the DL beam reported through (i.e. indicated by) the PRACH resource utilized for transmission of the preamble when a UE responds to a beam swept paging indication. Depending on how many DL beams are found to be acceptable by the UE, a matching preamble will be selected and sent to the network in a random access message.

The preamble selected by the UE will then not just indicate that this is a request for additional paging information, but it will also indicate which DL beam(s) the UE is able to receive from the network.

Based on the information in the Acceptable DL beam set provided by each PI matching UE (i.e. each UE responding to the PI) located in the cell, which gives the network an overview of all the UEs' Acceptable DL Beam sets and their relations to each other, the network can identify the response beam aggregation choice that minimizes the total number of response beams transmitted in the cell. To this end, the network, e.g. a gNB, first identifies the overlaps between the respective Acceptable DL Beam sets reported by the UEs (i.e. as indicated by the received preambles) and then, leveraging the identified overlaps, finds the combination of DL beams that with the least number of DL beams can be used to reach all responding UEs in the cell (i.e. all the UEs that transmitted the received preambles), i.e. each UE receives the transmission from the network, e.g. gNB, in a beam belonging to the UE's Acceptable DL Beam set.

### Example embodiment 1

For example, in a first particular embodiment, if three UEs (UE1, UE2 and UE3) located in three different beam sectors (Beam1, Beam2 and Beam3) have reported ability to receive the response beams in all three beam sectors (Beam1, Beam2 or Beam3), then the network can respond to all three UEs with one single response beam (e.g. in Beam2) and by that save DL signaling resources.

In particular embodiments, the selection of an acceptable DL beam to be included in the Acceptable DL Beam set can be based on the same methodology as when the UE (when in RRC_IDLE or RRC_INACTIVE state) selects a suitable SS Block beam and the PRACH resource at initial access. In NR, the quality of a cell where beam sweeping of SS Block transmissions (or other reference signals used for the purpose of channel quality measurements) is used is based on UE measurements on one or more DL beams (of SS Block transmissions or some other reference signals). The DL beams to take into account in this cell quality derivation can be defined by an absolute threshold (e.g. based on RSRQ, RSRP, SNR or SINR measurements), wherein the DL beams whose measured quality (e.g. in terms of RSRQ, RSRP, SNR or SINR) exceed the threshold are the ones taken into account, e.g. for averaging. This absolute threshold may be provided to the UE in the system information.

In particular embodiments, for the selection and reporting of acceptable DL beams in the Acceptable DL Beam set, either the same threshold as used for selecting DL beams to be used for cell quality derivation (by UEs in RRC_IDLE or RRC_INACTIVE state), or one or more new threshold(s) can be defined for the selection of acceptable DL beams.

Another alternative would be to define one or more offsets to the threshold used for selecting DL beams to be used for cell quality derivation. The offset(s) can then be signaled in the system information, e.g. together with the threshold used for selecting DL beams to be used for cell quality derivation.

In particular embodiments, the dedicated preambles can either be defined as cell independent parameters (e.g. defined in appropriate 3GPP specification or provided in system information), or as cell specific parameters (configured and broadcasted in each cell's system information).

The following table (Table 1) is an example realization of the technique, using three dedicated preambles, each being associated with a certain Acceptable DL Beam set. In this example, it is assumed that each DL beam direction is associated with a separate PRACH resource. Table 1 shows the interpretations of the three dedicated preambles.

**Table 1: Preamble mapping, example embodiment 1.**

| | |
|---|---|
| Preamble 1: | "The DL beam direction indicated by the PRACH resource is the only beam I can receive the additional paging information in." |
| Preamble 2: | "I can receive the additional paging information in the DL beam direction indicated by the PRACH resource and in the next adjacent (in terms of beam index) beam." |
| Preamble 3: | "I can receive the additional paging information in the DL beam direction indicated by the PRACH resource, the preceding and the next (in terms of beam index) beam." |

By sending a random access message with preamble 1, the UE indicates that it can only receive the response message (containing the additional paging information) in the same beam sector as the random access request message, i.e. the preamble, was sent from, i.e. as indicated by the PRACH resource.

By sending a random access message with preamble 2 or 3, the UE indicates its ability to receive the response message (containing the additional paging information) in any of the indicated beam sectors. Based on this information, the network can send the response beam containing the additional paging information in any of the indicated DL beams. Which DL beam(s) is (are) finally selected by the network depends on the response and ability (in terms of DL beam reception) from other PI matching UEs in the cell. That is, the choice of DL beam(s) is based on the Acceptable DL Beam sets reported by the responding UEs and any overlaps in these sets that the network (e.g. the gNB) identifies.

### Example embodiment 2

According to certain other embodiments, Table 2 is another example (still assuming a one to one mapping between DL beam direction and PRACH resource), where six dedicated preambles are reserved and where the UE sends the preamble in the PRACH resource associated with the best beam. This will improve the reception of the preamble in the gNB. In addition, since the gNB with this solution variant is aware of which of the beams in a UE's Acceptable DL Beam set that is the best for the UE, the gNB can choose to transmit the additional paging information in that beam, e.g. in case the UE's Acceptable DL Beam set does not overlap with any other UE's Acceptable DL Beam set. This will also improve the UE's reception of the additional paging information in these cases. Table 2 shows the interpretations of the six dedicated preambles.

**Table 2: Preamble mapping, example embodiment 2.**

| | |
|---|---|
| Preamble 1: | "The DL beam direction indicated by the PRACH resource is the only beam I can receive the additional paging information in." |
| Preamble 2: | "I can receive the additional paging information in the DL beam direction indicated by the PRACH resource and in the next adjacent (in terms of beam index) beam and the DL beam direction indicated by the PRACH resource is the best." |
| Preamble 3: | "I can receive the additional paging information in the DL beam direction indicated by the PRACH resource and in the preceding adjacent (in terms of beam index) beam and the DL beam direction indicated by the PRACH resource is the best." |
| Preamble 4: | "I can receive the additional paging information in the DL beam direction indicated by the PRACH resource and in the two next (in terms of beam index) beams and the DL beam direction indicated by the PRACH resource is the best." |
| Preamble 5: | "I can receive the additional paging information in the DL beam direction indicated by the PRACH resource, the preceding and in the next (in terms of beam index) beam and the DL beam direction indicated by the PRACH resource is the best." |
| Preamble 6: | "I can receive the additional paging information in the DL beam direction indicated by the PRACH resource and in the two preceding (in terms of beam index) beams and the DL beam direction indicated by the PRACH resource is the best." |

By sending a random access message with preamble 1, the UE indicates that it can only receive the response message (containing the additional paging information) in the DL beam direction associated with the PRACH resource, e.g. in the same beam sector as the random access request message, i.e. the preamble, was sent from.

By sending a random access message with preamble 2 or 3, the UE indicates its ability to receive the response message (containing the additional paging information) in any of the two indicated beam sectors (and that the DL beam direction associated with the PRACH resource is the best/preferred).

By sending a random access message with preamble 4, 5 or 6, the UE indicates its ability to receive the response message (containing the additional paging information) in any of the three indicated beam sectors (and that the DL beam direction associated with the PRACH resource is the best/preferred).

When receiving a random access message with any of the preambles 2, 3, 4, 5 or 6, the network can send the response message containing the additional paging information in any of the indicated DL beams. Which DL beam(s) is (are) finally selected by the network depends on the reported ability (in terms of DL beam reception and Acceptable DL Beam sets) from other PI matching UEs in the cell. That is, the choice of DL beam(s) is based on the Acceptable DL Beam sets reported by the responding UEs and any overlaps between these sets that the network (e.g. the gNB) identifies.

### Example embodiment 3

According to yet another embodiment, the best/preferred DL beam may not be indicated by the selection of the PRACH resource. Specifically, while this example embodiment is similar to the example embodiment 2 in that the UE is enabled to report the best/preferred DL in the reported set of acceptable DL beams and that six preambles are dedicated for such reporting purposes, the best/preferred DL beam is not the one associated with the PRACH resource. Instead, the best/preferred DL beam may be indicated by the choice of preamble (or the combination of the PRACH resource and the preamble). To this end, the 6 dedicated preambles are interpreted as described in Table 3 below.

**Table 3: Preamble mapping, example embodiment 3**

| | |
|---|---|
| Preamble 1: | "The DL beam direction indicated by the PRACH resource is the only beam I can receive the additional paging information in." |
| Preamble 2: | "I can receive the additional paging information in the DL beam direction indicated by the PRACH resource and in the next adjacent (in terms of beam index) beam and the first of these two DL beams (i.e. the DL beam direction indicated by the PRACH resource) is the best." |
| Preamble 3: | "I can receive the additional paging information in the DL beam direction indicated by the PRACH resource and in the next adjacent (in terms of beam index) beam and the second of these two DL beams (i.e. the DL beam direction *not* indicated by the PRACH resource) is the best." |
| Preamble 4: | "I can receive the additional paging information in the DL beam direction indicated by the PRACH resource, the preceding and the next (in terms of beam index) beam and the first of these DL beam direction (i.e. the one preceding the one indicated by the PRACH resource) is the best." |
| Preamble 5: | "I can receive the additional paging information in the DL beam direction indicated by the PRACH resource, the preceding and the next (in terms of beam index) beam and the second of these DL beam direction (i.e. the one indicated by the PRACH resource) is the best." |
| Preamble 6: | "I can receive the additional paging information in the DL beam direction indicated by the PRACH resource, the preceding and the next (in terms of beam index) beam and the third of these DL beam direction (i.e. the one following the one indicated by the PRACH resource) is the best." |

Although this example embodiment allows reporting of the same sizes of acceptable DL beam sets as the preceding example embodiment (embodiment 2) and, like example embodiment, also allows reporting of the UE's preferred DL beam, it may be considered inferior to example embodiment 2 since the UE will not always use the PRACH resource associated with the best DL beam when it transmits the preamble. Thus, the conditions for reception of the preamble at the gNB may be suboptimal (albeit good enough).

### Example embodiment 4

In another example embodiment, the previously described principle of associating groups of DL beams (e.g. SS Block beams which correspond to paging beams) with the same PRACH resource is assumed. Hence, for regular random access the pool of available preambles is divided among the DL beams in a group. To maintain the properties of the present inventive solution (as described in example embodiment 1, 2 and 3), a similar separation of preambles between DL beams in a group have to be used.

Hence, to apply the above described solution in such a scenario, the dedicated preambles have to be multiplied by the number of DL beams in a group of DL beams associated with the same PRACH resource. In an example illustrating this principle, we assume that each PRACH resource is associated with a group of 4 DL beams. Then, the three dedicated preambles in example embodiment 1 become 4 sets of 3 preambles each, i.e. 12 dedicated preambles. When a UE sends a preamble in response to a beam swept paging indication (with a matching PI), the PRACH resource indicates a group of DL beams and the set of preambles from which the preamble is chosen indicates one DL beam within the group of DL beams that the UE can accept for delivery of the requested additional paging information (including the full UE ID(s)). Hence, the PRACH resource and the set of preambles indicate one acceptable DL beam. Furthermore, the three preambles within the set of preambles have the same interpretations as described above in Table 1 (i.e. one, two or three adjacent beams).

If the UE should also be enabled to report which of the DL beams in a reported set of acceptable DL beams that is the best, as described in example embodiment 2, then, still using the example with a group of 4 DL beams being associated with the same PRACH resource, the number of dedicated preambles becomes 24, i.e. 4 sets of preambles (one for each DL beam in the group of DL beams) with 6 preambles in each set.

### Further extensions and variations

The dedicated preambles described in the example embodiments above are just examples. Other quantities and interpretations of the dedicated preambles are possible.

For instance, one may consider dedicating a greater number of preambles for DL beam reporting in conjunction with response-driven paging, in order to enrich the DL beam reporting possibilities (e.g. to enable reporting of up to 4 Acceptable DL Beams). This is a tradeoff which among other things may depend on how common it is that a UE has a need to report some other size or configuration of the set of Acceptable DL Beams than what has been described in the above example embodiments. This in turn may depend on, for example, the size of the coverage area of each DL beam, which may in turn depend on, for example, the transmission power and the beam width or beam angle size and the value of the threshold determining which DL beams that are considered acceptable.

In a particular embodiment, as one option, a network operator, or the network autonomously, may choose to dedicate a smaller or greater number of preambles for this type of beam reporting in a cell, depending on the cell's circumstances, such as the size of each individual beam's coverage area.

In a different scenario where the inventive solution may be applied the gNB supports directional reciprocity. That is, the gNB is able to select a suitable DL beam based on directional measurements on UL transmission from a UE (e.g. a preamble transmission in this context), such as Direction of Arrival (DoA) or Angle of Arrival (AoA) measurements. In such scenarios neither the PRACH resource nor separate sets of preambles have to be associated with different DL beam directions, since the gNB anyway can derive a suitable DL beam direction based on measurements on UL transmissions from the UE. Such associations are not precluded, but the network may also e.g. configure the same PRACH resources, irrespective of the DL beam (e.g. SS Block beam) the UE receives.

Different dedicated preambles could still be used to indicate different sets of acceptable beams, as described in the example embodiments above, but the dedicated preambles will not have to be multiplied when a group of DL beams (e.g. SS Block beams) map to the same PRACH resource. In an example, using six dedicated preambles the preambles could be interpreted as described in Table 4.

**Table 4: Preamble mapping example when the gNB supports directional reciprocity**

| | |
|---|---|
| Preamble 1: | "Only one DL beam is acceptable." [The gNB will derive this DL beam based on directional measurements on the received preamble.] |
| Preamble 2: | "Two DL beams are acceptable, the best and the preceding (in terms of beam index) DL beam." [The gNB will derive the best DL beam based on directional measurements on the received preamble and the gNB also knows that one DL beam width (e.g. one SS Block beam width) beside it (the preceding beam width in "beam sweeping/beam indexing order") will also work.] |
| Preamble 3: | "Two DL beams are acceptable, the best and the subsequent (in terms of beam index) DL beam." [The gNB will derive the best DL beam based on directional measurements on the received preamble and the gNB also knows that one DL beam width (e.g. one SS Block beam width) beside it (the subsequent beam width in "beam sweeping/beam indexing order") will also work.] |
| Preamble 4: | "Three DL beams are acceptable, the best and the two preceding (in terms of beam index) DL beams." [The gNB will derive the best DL beam based on directional measurements on the received preamble and the gNB also knows that two DL beam widths (e.g. two SS Block beam widths) beside it (the preceding two beam widths in "beam sweeping/beam indexing order") will also work.] |
| Preamble 5: | "Three DL beams are acceptable, the best, the preceding and the subsequent (in terms of beam index) DL beam." [The gNB will derive the best DL beam based on directional measurements on the received preamble and the gNB also knows that one DL beam width (e.g. one SS Block beam width) on each side of the best beam will also work.] |
| Preamble 6: | "Three DL beams are acceptable, the best and the two subsequent (in terms of beam index) DL beams." [The gNB will derive the best DL beam based on directional measurements on the received preamble and the gNB also knows that two DL beam widths (e.g. two SS Block beam widths) beside it (the subsequent two beam widths in "beam sweeping/beam indexing order") will also work.] |

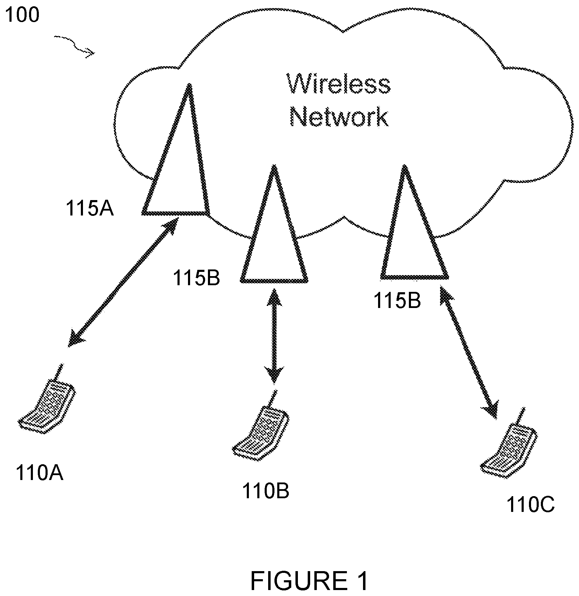

FIGURE 1 is a block diagram illustrating an example embodiment of a wireless network 100 for response beam aggregation for paging on higher carrier frequencies, in accordance with certain embodiments. Network 100 includes one or more wireless devices 110A-C, which may be interchangeably referred to as wireless devices 110 or UEs 110, and network nodes 115A-C, which may be interchangeably referred to as network nodes 115 or gNBs 115 or eNodeBs 115. A wireless device 110 may communicate with network nodes 115 over a wireless interface. For example, wireless device 110A may transmit wireless signals to one or more of network nodes 115, and/or receive wireless signals from one or more of network nodes 115. The wireless signals may contain voice traffic, data traffic, control signals, and/or any other suitable information. In some embodiments, an area of wireless signal coverage associated with a network node 115 may be referred to as a cell. In some embodiments, wireless devices 110 may have D2D capability. Thus, wireless devices 110 may be able to receive signals from and/or transmit signals directly to another wireless device 110. For example, wireless device 110A may be able to receive signals from and/or transmit signals to wireless device 110B.

In certain embodiments, network nodes 115 may interface with a radio network controller (not depicted in FIGURE 1). The radio network controller may control network nodes 115 and may provide certain radio resource management functions, mobility management functions, and/or other suitable functions. In certain embodiments, the functions of the radio network controller may be included in network node 115. The radio network controller may interface with a core network node. In certain embodiments, the radio network controller may interface with the core network node via an interconnecting network. The interconnecting network may refer to any interconnecting system capable of transmitting audio, video, signals, data, messages, or any combination of the preceding. The interconnecting network may include all or a portion of a public switched telephone network (PSTN), a public or private data network, a local area network (LAN), a metropolitan area network (MAN), a wide area network (WAN), a local, regional, or global communication or computer network such as the Internet, a wireline or wireless network, an enterprise intranet, or any other suitable communication link, including combinations thereof.

In some embodiments, the core network node may manage the establishment of communication sessions and various other functionalities for wireless devices 110. Wireless devices 110 may exchange certain signals with the core network node using the non-access stratum layer. In non-access stratum signaling, signals between wireless devices 110 and the core network node may be transparently passed through the radio access network. In certain embodiments, network nodes 115 may interface with one or more network nodes over an internode interface. For example, network nodes 115A and 115B may interface over an Xn or X2 interface.

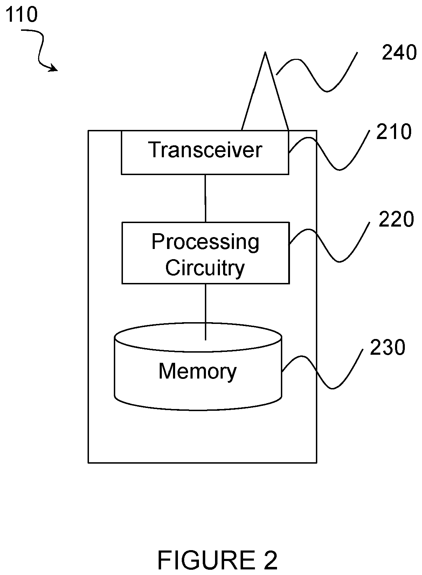

As described above, example embodiments of network 100 may include one or more wireless devices 110, and one or more different types of network nodes capable of communicating (directly or indirectly) with wireless devices 110. Wireless device 110 may refer to any type of wireless device communicating with a node and/or with another wireless device in a cellular or mobile communication system. Examples of wireless device 110 include a mobile phone, a smart phone, a PDA (Personal Digital Assistant), a portable computer (e.g., laptop, tablet), a sensor, a modem, a machine-type-communication (MTC) device / machine-to-machine (M2M) device, laptop embedded equipment (LEE), laptop mounted equipment (LME), USB dongles, a D2D capable device, or another device that can provide wireless communication. A wireless device 110 may also be referred to as UE, a station (STA), a device, or a terminal in some embodiments. Also, in some embodiments, generic terminology, "radio network node" (or simply "network node") is used. It can be any kind of network node, which may comprise a Node B, base station (BS), multi-standard radio (MSR) radio node such as MSR BS, gNB, eNode B, network controller, radio network controller (RNC), base station controller (BSC), relay donor node controlling relay, base transceiver station (BTS), access point (AP), transmission points, transmission nodes, RRU, RRH, nodes in distributed antenna system (DAS), core network node (e.g. MSC, MME etc.), O&M, OSS, SON, positioning node (e.g. E-SMLC), MDT, or any suitable network node. Example embodiments of network nodes 115, wireless devices 110, and other network nodes (such as radio network controller or core network node) are described in more detail with respect to FIGURES 2, 7, and 12, respectively.

Although FIGURE 1 illustrates a particular arrangement of network 100, the present disclosure contemplates that the various embodiments described herein may be applied to a variety of networks having any suitable configuration. For example, network 100 may include any suitable number of wireless devices 110 and network nodes 115, as well as any additional elements suitable to support communication between wireless devices or between a wireless device and another communication device (such as a landline telephone). Furthermore, although certain embodiments may be described as implemented in a long term evolution (LTE) network, the embodiments may be implemented in any appropriate type of telecommunication system supporting any suitable communication standards and using any suitable components, and are applicable to any radio access technology (RAT) or multi-RAT systems in which the wireless device receives and/or transmits signals (e.g., data). For example, the various embodiments described herein may be applicable to LTE, LTE-Advanced, LTE-U UMTS, HSPA, GSM, cdma2000, WiMax, WiFi, another suitable radio access technology, or any suitable combination of one or more radio access technologies. Although certain embodiments may be described in the context of wireless transmissions in the downlink, the present disclosure contemplates that the various embodiments are equally applicable in the uplink and vice versa.

The techniques for response beam aggregation for paging on higher carrier frequencies described herein are applicable to both LAA LTE and standalone LTE operation in license-exempt channels. The described techniques are generally applicable for transmissions from both network nodes 115 and wireless devices 110.

FIGURE 2 is a block schematic of an exemplary wireless device 110 for reporting a set of acceptable downlink DL beam directions or DL beams to a network node, in accordance with certain embodiments. Wireless device 110 may refer to any type of wireless device communicating with a node and/or with another wireless device in a cellular or mobile communication system. Examples of wireless device 110 include a mobile phone, a smart phone, a PDA (Personal Digital Assistant), a portable computer (e.g., laptop, tablet), a sensor, a modem, an MTC device / machine-to-machine (M2M) device, laptop embedded equipment (LEE), laptop mounted equipment (LME), USB dongles, a D2D capable device, or another device that can provide wireless communication. A wireless device 110 may also be referred to as UE, a station (STA), a device, or a terminal in some embodiments. Wireless device 110 includes transceiver 210, processing circuitry 220, and memory 230. In some embodiments, transceiver 210 facilitates transmitting wireless signals to and receiving wireless signals from network node 115 (e.g., via antenna 240), processing circuitry 220 (e.g., which may include one or more processors) executes instructions to provide some or all of the functionality described above as being provided by wireless device 110, and memory 230 stores the instructions executed by processing circuitry 220.

Processing circuitry 220 may include any suitable combination of hardware and software implemented in one or more modules to execute instructions and manipulate data to perform some or all of the described functions of wireless device 110, such as the functions of UE 110 (i.e., wireless device 110) described herein. For example, in general, processing circuitry 220 may save a current version of system information and/or apply a previously stored version of system information based on a system information notification (e.g., system information change notification, system information modification, or system information update) received in a paging message from a network node 115. In some embodiments, processing circuitry 220 may include, for example, one or more computers, one or more central processing units (CPUs), one or more microprocessors, one or more applications, one or more application specific integrated circuits (ASICs), one or more field programmable gate arrays (FPGAs) and/or other logic.

Memory 230 is generally operable to store instructions, such as a computer program, software, an application including one or more of logic, rules, algorithms, code, tables, etc. and/or other instructions capable of being executed by a processor. Examples of memory 230 include computer memory (for example, Random Access Memory (RAM) or Read Only Memory (ROM)), mass storage media (for example, a hard disk), removable storage media (for example, a Compact Disk (CD) or a Digital Video Disk (DVD)), and/or or any other volatile or non-volatile, non-transitory computer-readable and/or computer-executable memory devices that store information, data, and/or instructions that may be used by processing circuitry 220.

Other embodiments of wireless device 110 may optionally include additional components beyond those shown in FIGURE 2 that may be responsible for providing certain aspects of the wireless device's functionality, including any of the functionality described above and/or any additional functionality (including any functionality necessary to support the solution described above). As just one example, wireless device 110 may include input devices and circuits, output devices, and one or more synchronization units or circuits, which may be part of the processing circuitry 220. Input devices include mechanisms for entry of data into wireless device 110. For example, input devices may include input mechanisms, such as a microphone, input elements, a display, etc. Output devices may include mechanisms for outputting data in audio, video, and/or hard copy format. For example, output devices may include a speaker, a display, etc.

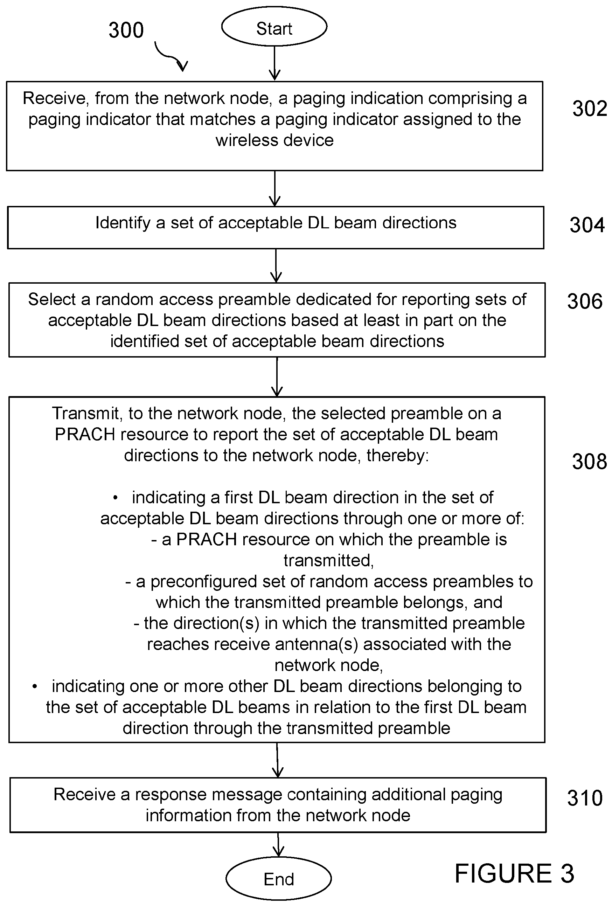

FIGURE 3 illustrates an example method 300 for reporting a set of acceptable DL beam directions or DL beams to a network node, according to certain embodiments. The method begins at step 302 when wireless device 110 receives, from the network node, a paging indication comprising a paging indicator that matches a paging indicator assigned to the wireless device.

At step 304, wireless device 110 identifies a set of acceptable DL beam directions (note that this step may also be performed before step 302). In a particular embodiment, the DL beam directions in the identified set of acceptable DL beams are DL beam directions which provide the wireless device with a channel quality above a predetermined threshold.

At step 306, wireless device 110 selects a random access preamble dedicated for reporting sets of acceptable DL beam directions based at least in part on the identified set of acceptable DL beam directions. In a particular embodiment, the first DL beam direction may be a best DL beam direction. The best DL beam direction may provide the wireless device with a best channel quality of all the DL beams associated with the network node, in a particular embodiment. The channel quality may be measured in terms of any one of or a combination of received power (the higher the better channel quality), RSRP (the higher the better channel quality), RSRQ (the higher the better channel quality), SNR (the higher the better channel quality) and SINR (the higher the better channel quality).

At step 308, wireless device 110 transmits, to the network node, the selected preamble on a PRACH resource to report the set of acceptable DL beam directions to the network node, thereby:
∘ indicating a first DL beam direction in the set of acceptable DL beam directions through one or more of:
   ▪ a PRACH resource on which the preamble is transmitted,
   ▪ a preconfigured set of random access preambles to which the transmitted preamble belongs, and
   ▪ the direction(s) in which the transmitted preamble reaches receive antenna(s) associated with the network node,
∘ indicating one or more other DL beam directions belonging to the set of acceptable DL beams in relation to the first DL beam direction through the transmitted preamble.

At step 310, wireless device 110 receives a response message containing additional paging information (e.g. the full UE paging identifier(s)) from the network node.

Certain embodiments may comprise more or fewer actions, and the actions may be performed in any suitable order.

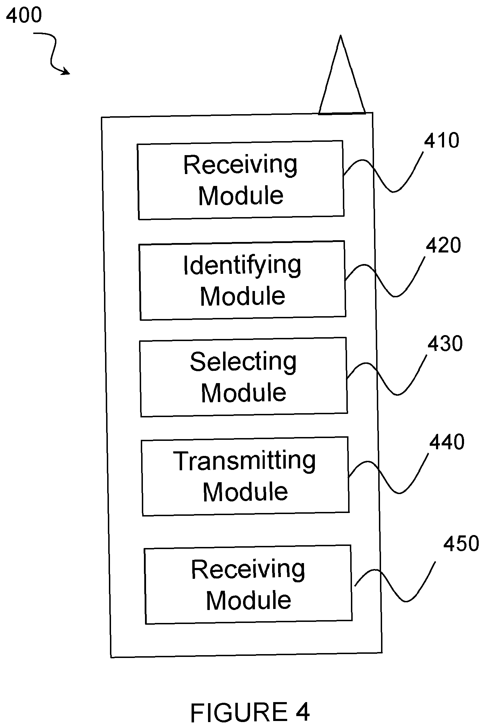

In certain embodiments, the method for reporting a set of acceptable downlink (DL) beam directions or DL beams to a network node may be performed by a virtual computing device. FIGURE 4 illustrates an example virtual computing device 400 for reporting a set of acceptable downlink (DL) beam directions or DL beams to a network node, according to certain embodiments. In certain embodiments, virtual computing device 400 may include modules for performing steps similar to those described above with regard to the method illustrated and described in FIGURE 3. For example, virtual computing device 400 may include a receiving module 410, an identifying module 420, a selecting module 430, a transmitting module 440, a receiving module 450, and any other suitable modules for reporting a set of acceptable downlink (DL) beam directions or DL beams to a network node. In some embodiments, one or more of the modules may be implemented using processing circuitry 220 of FIGURE 2. In certain embodiments, the functions of two or more of the various modules may be combined into a single module.

The receiving module 410 may perform certain of the receiving functions of virtual computing device 400. For example, in a particular embodiment, receiving module 410 may receive from the network node, a paging indication comprising a paging indicator that matches a paging indicator assigned to the wireless device.

The identifying module 420 may perform certain of the identifying functions of virtual computing device 400. For example, in a particular embodiment, identifying module 420 may identify a set of acceptable DL beam directions. In a particular embodiment, the DL beam directions in the identified set of acceptable DL beams are DL beam directions which provide the wireless device with a channel quality above a predetermined threshold.

The selecting module 430 may perform certain of the selecting functions of virtual computing device 400. For example, in a particular embodiment, selecting module 430 may select a random access preamble dedicated for reporting sets of acceptable DL beam directions based at least in part on the identified set of acceptable beam directions.

The transmitting module 440 may perform certain of the transmitting functions of virtual computing device 400. For example, in a particular embodiment, transmitting module 440 may transmit, to the network node, the selected preamble on a PRACH resource to report the set of acceptable DL beam directions to the network node.

The receiving module 450 may perform certain of the receiving functions of virtual computing device 400. For example, in a particular embodiment, transmitting module 450 may receive a response message containing additional paging information from the network node.

Other embodiments of virtual computing device 400 may include additional components beyond those shown in FIGURE 4 that may be responsible for providing certain aspects of the wireless device's functionality, including any of the functionality described above and/or any additional functionality (including any functionality necessary to support the solutions described above). The various different types of wireless devices may include components having the same physical hardware but configured (e.g., via programming) to support different radio access technologies, or may represent partly or entirely different physical components.

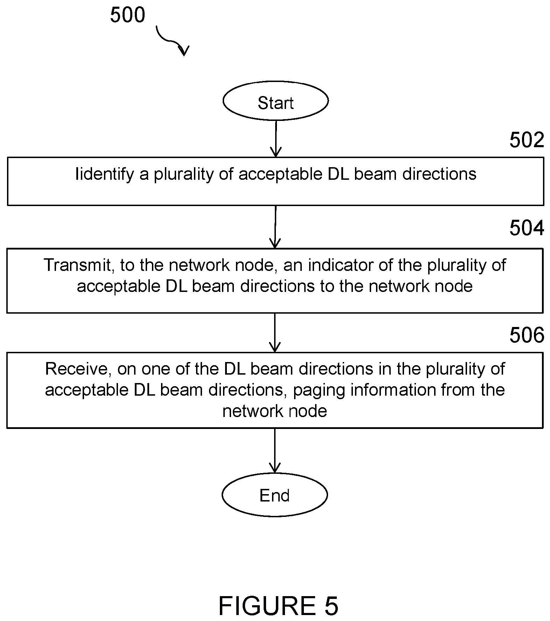

FIGURE 5 illustrates another example method 500 by a wireless device 110 for reporting acceptable downlink (DL) beam directions or DL beams to a network node 115, according to certain embodiments. The method begins at step 502 when wireless device 110 identifies a plurality of acceptable DL beam directions.

At step 504, wireless device 110 transmits an indicator of the plurality of acceptable DL beam directions to the network node 115.

In a particular embodiment, the indicator identifies a best DL beam direction within the plurality of acceptable DL beam directions. For example, the best DL beam direction may provide the wireless device with a best channel quality of the plurality of DL beams associated with the network node, in a particular embodiment.

At step 506, wireless device 110 receives additional paging information from the network node 115 on one of the DL beam directions in the plurality of acceptable DL beam directions.

In a particular embodiment, the one of the DL beam directions on which the paging information is received from the network node is the best beam DL beam direction. In another embodiment, the one of the DL beam directions on which the paging information is received from the network node is not the best DL beam direction.

In a particular embodiment, prior to step 502, the method may further include the wireless device 110 receiving a paging indication from the network node and determining that the paging indication matches a user equipment idenitifer (UE) assigned to the wireless device. In a particular embodiment, for example, the paging indication may include a truncated UE ID associated with the wireless device. The plurality of acceptable DL beam directions may be identified in response to receiving the paging indication determined to match the UE ID assigned to the wireless device.

In a particular embodiment, the method may further include the wireless device 110 selecting a random access preamble based at least in part on the plurality of acceptable DL beam directions identified by the wireless device. The indicator of the plurality of acceptable DL beam directions may be transmitted to the network node using the selected random access preamble, in a particular embodiment.

In another particular embodiment, the method may further include the wireless device 110 selecting a PRACH resource based at least in part on the plurality of acceptable DL beam directions identified by the wireless device. The indicator of the plurality of acceptable DL beam directions may consist at least partly of the selected PRACH resource, in a particular embodiment.

In a particular embodiment, the indicator may identify the wireless device as being able to receive the paging information in at least one particular DL beam direction associated with the selected random access preamble or the selected PRACH resource.

In another particular embodiment, the method may further include the wireless device 110 determining that each DL beam direction in the plurality of acceptable DL beam directions provides the wireless device 110 with a channel quality above a threshold. For example, the channel quality may be measured by at least one of a RSRP, a RSRQ, SNR, and SINR.

In a particular embodiment, wireless device 110 may receive the threshold as system information.

In a particular embodiment, the threshold may be a threshold used for cell quality derivation, and an offset may be applied to the threshold before using the threshold to determine each DL beam direction that provides the wireless device 110 with the channel quality above the threshold.

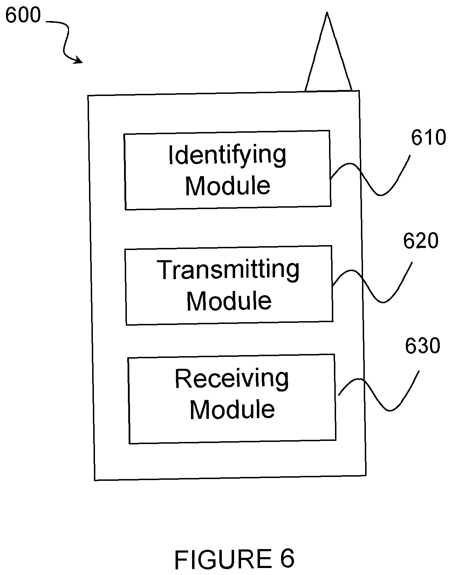

In certain embodiments, the method for reporting acceptable DL beam directions to a network node 115 may be performed by a virtual computing device. FIGURE 6 illustrates an example virtual computing device 600 for reporting a set of acceptable DL beam directions to a network node, according to certain embodiments. In certain embodiments, virtual computing device 600 may include modules for performing steps similar to those described above with regard to the method illustrated and described in FIGURE 5. For example, virtual computing device 600 may include an identifying module 610, a transmitting module 620, a receiving module 630, and any other suitable modules for reporting a set of acceptable DL beam directions to a network node 115. In some embodiments, one or more of the modules may be implemented using processing circuitry 220 of FIGURE 2. In certain embodiments, the functions of two or more of the various modules may be combined into a single module.

The identifying module 610 may perform certain of the identifying functions of virtual computing device 600. For example, in a particular embodiment, identifying module 610 may identify a plurality of acceptable DL beam directions.

The transmitting module 620 may perform certain of the transmitting functions of virtual computing device 600. For example, in a particular embodiment, transmitting module 620 may transmit an indicator of the plurality of acceptable DL beam directions to the network node 115.

The receiving module 630 may perform certain other of the receiving functions of virtual computing device 600. For example, in a particular embodiment, second receiving module 630 may receive paging information from the network node 115 on one of the DL beam directions in the plurality of acceptable DL beam directions.

Other embodiments of virtual computing device 600 may include additional components beyond those shown in FIGURE 6 that may be responsible for providing certain aspects of the wireless device's functionality, including any of the functionality described above and/or any additional functionality (including any functionality necessary to support the solutions described above). The various different types of wireless devices may include components having the same physical hardware but configured (e.g., via programming) to support different radio access technologies, or may represent partly or entirely different physical components.

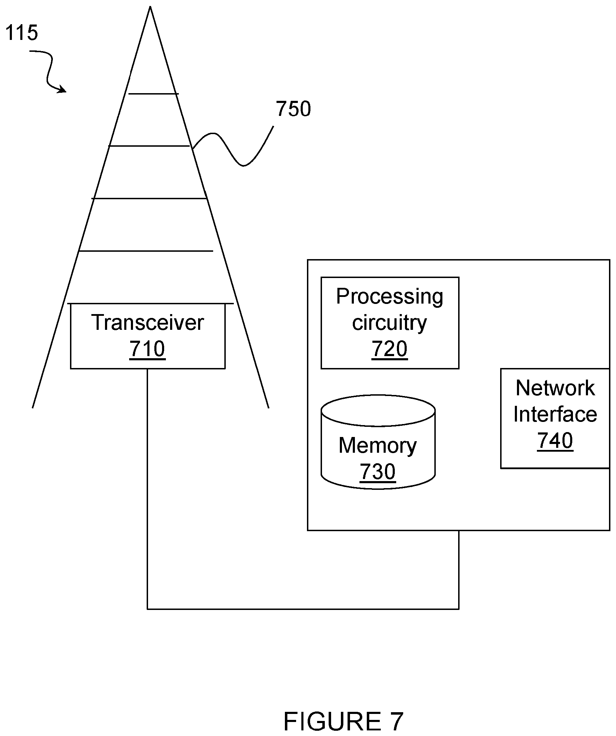

FIGURE 7 illustrates an example network node 115 for minimizing the number of downlink (DL) beam directions in which to transmit a message to one or more wireless device, in accordance with certain embodiments. Network node 115 may be any type of radio network node or any network node that communicates with a UE and/or with another network node. Examples of network node 115 include an gNB, eNodeB, a node B, a base station, a wireless access point (e.g., a Wi-Fi access point), a low power node, a base transceiver station (BTS), relay, donor node controlling relay, transmission points, transmission nodes, remote RF unit (RRU), remote radio head (RRH), multi-standard radio (MSR) radio node such as MSR BS, nodes in distributed antenna system (DAS), O&M, OSS, SON, positioning node (e.g., E-SMLC), MDT, or any other suitable network node. Network nodes 115 may be deployed throughout network 100 as a homogenous deployment, heterogeneous deployment, or mixed deployment. A homogeneous deployment may generally describe a deployment made up of the same (or similar) type of network nodes 115 and/or similar coverage and cell sizes and inter-site distances. A heterogeneous deployment may generally describe deployments using a variety of types of network nodes 115 having different cell sizes, transmit powers, capacities, and inter-site distances. For example, a heterogeneous deployment may include a plurality of low-power nodes placed throughout a macro-cell layout. Mixed deployments may include a mix of homogenous portions and heterogeneous portions.

Network node 115 may include one or more of transceiver 710, processing circuitry 720 (e.g., which may include one or more processors), memory 730, and network interface 740. In some embodiments, transceiver 710 facilitates transmitting wireless signals to and receiving wireless signals from wireless device 110 (e.g., via antenna 750), processing circuitry 720 executes instructions to provide some or all of the functionality described above as being provided by a network node 115, memory 730 stores the instructions executed by processing circuitry 720, and network interface 740 communicates signals to backend network components, such as a gateway, switch, router, Internet, Public Switched Telephone Network (PSTN), core network nodes or radio network controllers, etc.

Processing circuitry 720 may include any suitable combination of hardware and software implemented in one or more modules to execute instructions and manipulate data to perform some or all of the described functions of network node 115, such as those described herein. In some embodiments, processing circuitry 720 may include, for example, one or more computers, one or more central processing units (CPUs), one or more microprocessors, one or more applications, and/or other logic.

Memory 730 is generally operable to store instructions, such as a computer program, software, an application including one or more of logic, rules, algorithms, code, tables, etc. and/or other instructions capable of being executed by a processor. Examples of memory 730 include computer memory (for example, Random Access Memory (RAM) or Read Only Memory (ROM)), mass storage media (for example, a hard disk), removable storage media (for example, a Compact Disk (CD) or a Digital Video Disk (DVD)), and/or or any other volatile or non-volatile, non-transitory computer-readable and/or computer-executable memory devices that store information.

In some embodiments, network interface 740 is communicatively coupled to processing circuitry 720 and may refer to any suitable device operable to receive input for network node 115, send output from network node 115, perform suitable processing of the input or output or both, communicate to other devices, or any combination of the preceding. Network interface 740 may include appropriate hardware (e.g., port, modem, network interface card, etc.) and software, including protocol conversion and data processing capabilities, to communicate through a network.

Other embodiments of network node 115 may include additional components beyond those shown in FIGURE 7 that may be responsible for providing certain aspects of the radio network node's functionality, including any of the functionality described above and/or any additional functionality (including any functionality necessary to support the solutions described above). The various different types of network nodes may include components having the same physical hardware but configured (e.g., via programming) to support different radio access technologies, or may represent partly or entirely different physical components.

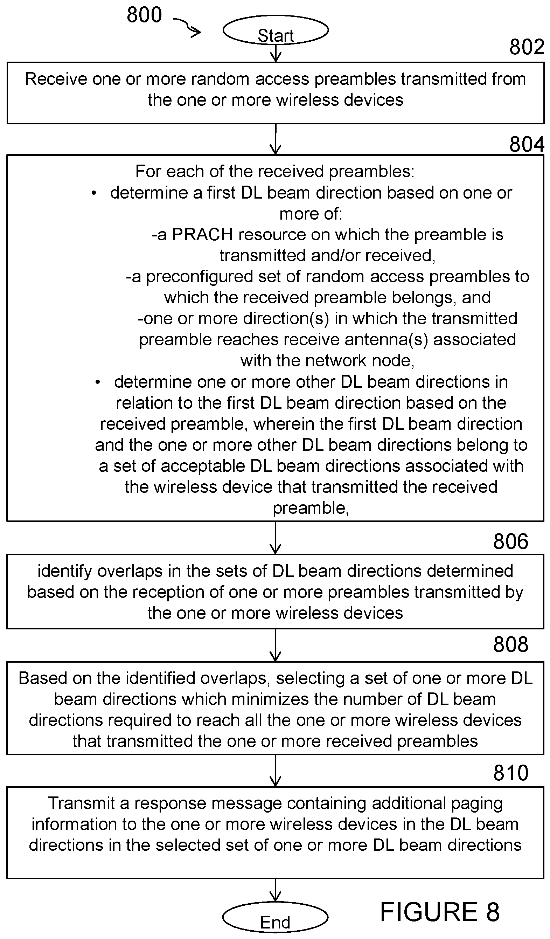

FIGURE 8 illustrates an example method 800 by a network node 115 for minimizing the number of DL beam directions in which to transmit a message to one or more wireless device 110, according to certain embodiments. The method begins at step 802 when network node 115 receives one or more random access preambles transmitted from the one or more wireless devices.

At step 804, for each of the received preambles, network node 115 determines a first DL beam direction based on one or more of:
▪ a PRACH resource on which the preamble is transmitted and/or received,
▪ a preconfigured set of random access preambles to which the received preamble belongs, and
▪ one or more direction(s) in which the transmitted preamble reaches receive antenna(s) associated with the network node.
Network node 115 also determines one or more other DL beam directions in relation to the first DL beam direction based on the received preamble, wherein the first DL beam direction and the one or more other DL beam directions belong to a set of acceptable DL beam directions associated with the wireless device that transmitted the received preamble.

In a particular embodiment, the first DL beam direction is a best DL beam direction. The best DL beam direction may provide the wireless device with a best channel quality of all the DL beams associated with the network node.

At step 806, network node 115 identifies overlaps in the sets of DL beam directions determined based on the reception of one or more preambles transmitted by the one or more wireless devices.

At step 808, based on the identified overlaps, network node 115 selects a set of one or more DL beam directions which minimizes the number of DL beam directions required to reach all the one or more wireless devices that transmitted the one or more received preambles.

At step 810, network node 115 transmits a response message containing additional paging information to the one or more wireless devices in the DL beam directions in the selected set of one or more DL beam directions.

Certain embodiments may comprise more or fewer actions, and the actions may be performed in any suitable order.

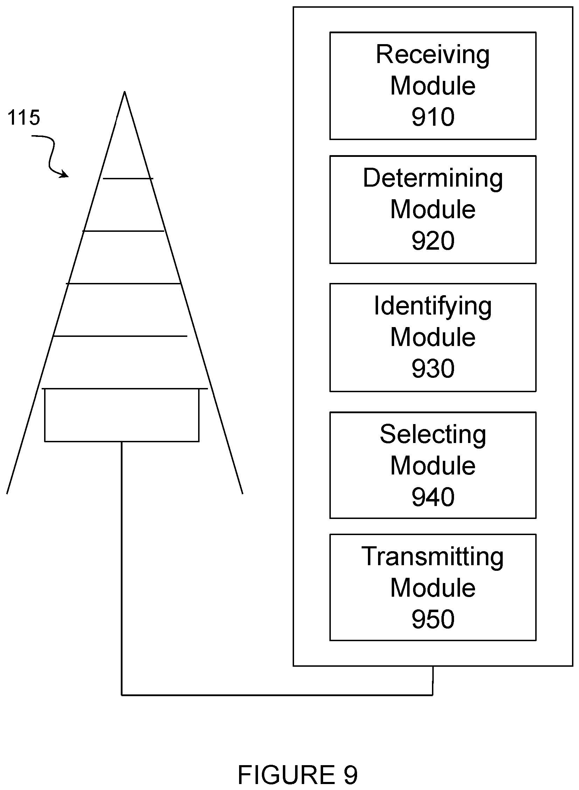

In certain embodiments, the method for minimizing the number of downlink (DL) beam directions in which to transmit a message to one or more wireless devices may be performed by a virtual computing device. FIGURE 9 illustrates an example virtual computing device 900 for minimizing the number of downlink (DL) beam directions in which to transmit a message to one or more wireless devices, according to certain embodiments. In certain embodiments, virtual computing device 900 may include modules for performing steps similar to those described above with regard to the method illustrated and described in FIGURE 8. For example, virtual computing device 900 may include a receiving module 910, a determining module 920, an identifying module 930, a selecting module 940, a transmitting module 950, and any other suitable modules for minimizing the number of DL beam directions in which to transmit a message to one or more wireless devices. In some embodiments, one or more of the modules may be implemented using processing circuitry 720 of FIGURE 7. In certain embodiments, the functions of two or more of the various modules may be combined into a single module.

The receiving module 910 may perform certain of the receiving functions of virtual computing device 900. For example, in a particular embodiment, receiving module 910 may receive one or more random access preambles transmitted from the one or more wireless devices.

The determining module 920 may perform certain of the determining functions of virtual computing device 900. For example, in a particular embodiment, determining module 920 may determine a first DL beam direction based on one or more of:
▪ a PRACH resource on which the preamble is transmitted and/or received,
▪ a preconfigured set of random access preambles to which the received preamble belongs, and
▪ one or more direction(s) in which the transmitted preamble reaches receive antenna(s) associated with the network node.
Determining module 920 may also determine one or more other DL beam directions in relation to the first DL beam direction based on the received preamble, wherein the first DL beam direction and the one or more other DL beam directions belong to a set of acceptable DL beam directions associated with the wireless device that transmitted the received preamble.

The identifying module 930 may perform certain of the identifying functions of virtual computing device 900. For example, in a particular embodiment, identifying module 930 may identify overlaps in the sets of DL beam directions determined based on the reception of one or more preambles transmitted by the one or more wireless devices.

The selecting module 940 may perform certain of the selecting functions of virtual computing device 900. For example, in a particular embodiment, selecting module 940 may select a set of one or more DL beam directions which minimizes the number of DL beam directions required to reach all the one or more wireless devices that transmitted the one or more received preambles.

The transmitting module 950 may perform certain of the selecting functions of virtual computing device 900. For example, in a particular embodiment, transmitting module 950 may transmit a response message containing additional paging information to the one or more wireless devices in the DL beam directions in the selected set of one or more DL beam directions.

Other embodiments of virtual computing device 900 may include additional components beyond those shown in FIGURE 9 that may be responsible for providing certain aspects of the network node's functionality, including any of the functionality described above and/or any additional functionality (including any functionality necessary to support the solutions described above). The various different types of wireless devices may include components having the same physical hardware but configured (e.g., via programming) to support different radio access technologies, or may represent partly or entirely different physical components.

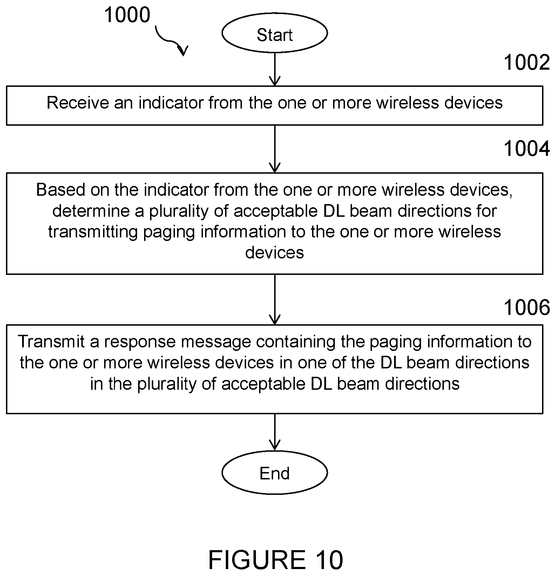

FIGURE 10 illustrates another example method 1000 by a network node 115 for determining DL beam directions in which to transmit a message to one or more wireless devices, according to certain embodiments. The method begins at step 1002 when network node 115 receives an indicator from the one or more wireless devices.

At step 1004, network node 115 determines, based on the indicator from the one or more wireless devices, a plurality of acceptable DL beam directions for transmitting additional paging information to the one or more wireless devices.

At step 1006, network node 115 transmits a response message containing the paging information to the one or more wireless devices in one of the DL beam directions in the plurality of acceptable DL beam directions.

In a particular embodiment, the indicator is associated with a direction of arrival, and the plurality of acceptable DL beam directions is determined based on the direction of arrival.

In a particular embodiment, the method may further include the network node 115 determining, based on the indication from the one or more wireless devices, a best DL beam direction in the plurality of DL beam directions. The one of the DL beam directions on which the paging information is transmitted may be the best beam DL beam direction.

In a particular embodiment, the method may further include the network node 115 determining, based on the indication from the one or more wireless devices, a best DL beam direction in the plurality of DL beam directions, and the one of the DL beam directions on which the paging information is transmitted may not be the best beam DL beam direction.

In a particular embodiment, the best DL beam direction may provide the one or more wireless devices with a best channel quality of the plurality of DL beams associated with the network node.

In a particular embodiment, receiving the indicator may include the network node 115 receiving a message transmitted by the one or more wireless devices 110 using a random access preamble, and the plurality of acceptable DL beam directions may be determined based on the random access preamble.

In another embodiment, receiving the indicator may include the network node 115 receiving a message transmitted by the one or more wireless devices 110 using a PRACH resource, and the plurality of acceptable DL beam directions based on the PRACH resource.

In a particular embodiment, the indicator may identify the one or more wireless devices as being able to receive the additional paging information in at least one particular DL beam direction associated with the selected random access preamble or the selected PRACH resource.

In a particular embodiment, each DL beam direction in the plurality of acceptable DL beam directions may provide the wireless device with a channel quality above a threshold. For example, the channel quality may be measured by at least one of RSRP, RSRQ, SNR, and SINR, in particular embodiments.

In a particular embodiment, the method may further include network node 115 transmitting, to the wireless device 110, the threshold as system information.

In a particular embodiment, the threshold may be a threshold used by the one or more wireless devices 110 for cell quality derivation, and an offset may be applied to the threshold before the threshold is used to determine each DL beam direction that provides the one or more wireless devices 110 with the channel quality above the threshold.

In a particular embodiment, prior to receiving the indication from the one or more wireless devices 110, the network node 115 may transmit, to the one or more wireless devices 110, a paging indication that matches a UE ID assigned to the wireless device. For example, in one particular embodiment,the paging indication may comprie a truncated UE ID associated with the wireless device.

In a particular embodiment, receiving the indicator from the one or more wireless devices 110 may include receiving a first indicator from a first wireless device 110 and a second indicator from a second wireless device 110. Likewise, determining the plurality of acceptable DL beam directions for transmitting additional paging information to the one or more wireless devices may include determining a first plurality of acceptable DL beam directions for transmitting additional paging information to the first wireless device 110 and a second plurality of acceptable DL beam directions for transmitting additional paging information to the second wireless device 110. Additionally, the method may further include the network node 115 determining that the one of the DL beam directions in which the response message is transmitted is in both the first plurality of acceptable DL beam directions and the second plurality of DL beam directions and selecting the one of the DL beam directions for transmitting the response message to minimize a number of DL beam directions required to reach the first and second wireless devices.

Certain embodiments may comprise more or fewer actions, and the actions may be performed in any suitable order.

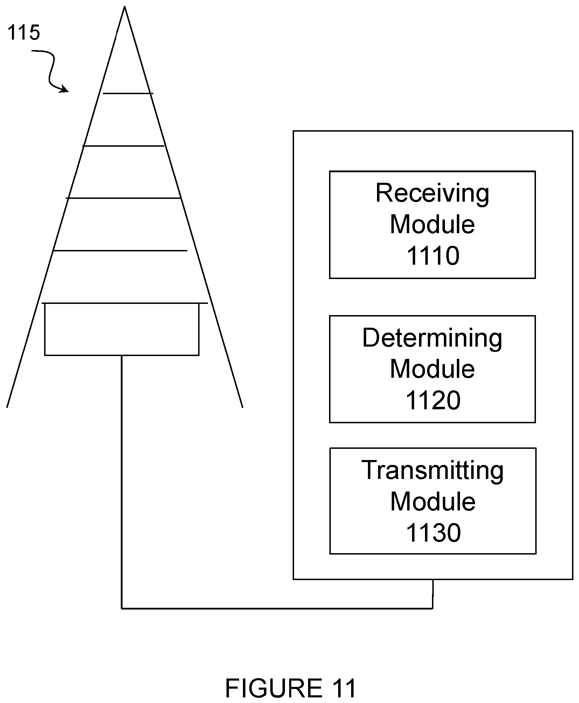

In certain embodiments, the method for minimizing the number of DL beam directions in which to transmit a message to one or more wireless devices may be performed by a virtual computing device. FIGURE 11 illustrates an example virtual computing device 1100 for minimizing the number of DL beam directions in which to transmit a message to one or more wireless devices, according to certain embodiments. In certain embodiments, virtual computing device 1100 may include modules for performing steps similar to those described above with regard to the method illustrated and described in FIGURE 10. For example, virtual computing device 1100 may include a receiving module 1110, a determining module 1120, a transmitting module 1130, and any other suitable modules for minimizing the number of DL beam directions in which to transmit a message to one or more wireless devices. In some embodiments, one or more of the modules may be implemented using processing circuitry 720 of FIGURE 7. In certain embodiments, the functions of two or more of the various modules may be combined into a single module.

The receiving module 1110 may perform certain of the receiving functions of virtual computing device 1100. For example, in a particular embodiment, receiving module 1110 may receive an indicator from the one or more wireless devices 110.

The determining module 1120 may perform certain of the determining functions of virtual computing device 1100. For example, in a particular embodiment, determining module 1120 may determine, based on the indicator from the one or more wireless devices, a plurality of acceptable DL beam directions for transmitting additional paging information to the one or more wireless devices 110.

The transmitting module 1130 may perform certain of the transmitting functions of virtual computing device 1100. For example, in a particular embodiment, transmitting module 1130 may transmit a response message containing the additional paging information to the one or more wireless devices 110 in one of the DL beam directions in the plurality of acceptable DL beam directions.

Other embodiments of virtual computing device 1100 may include additional components beyond those shown in FIGURE 11 that may be responsible for providing certain aspects of the network node's functionality, including any of the functionality described above and/or any additional functionality (including any functionality necessary to support the solutions described above). The various different types of network nodes may include components having the same physical hardware but configured (e.g., via programming) to support different radio access technologies, or may represent partly or entirely different physical components.

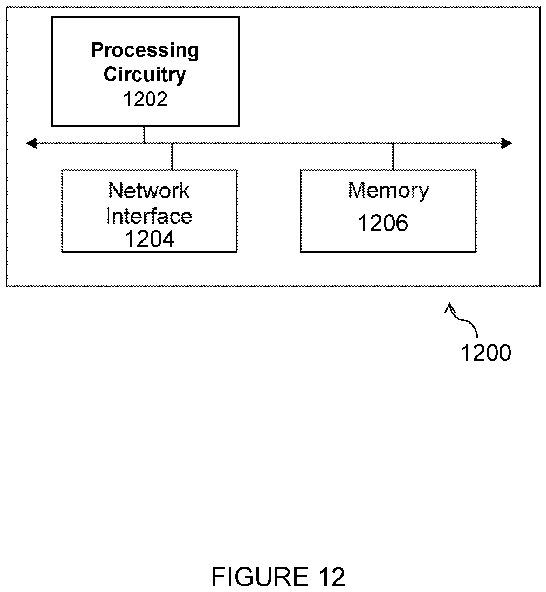

FIGURE 12 illustrates an example radio network controller or core network node 800, in accordance with certain embodiments. Examples of network nodes can include a mobile switching center (MSC), a serving GPRS support node (SGSN), a mobility management entity (MME), a radio network controller (RNC), a base station controller (BSC), an Access and Mobility Management Function (AMF), a User Plane Function (UPF), a Session Management Function (SMF) or an entity that implements the functionality of a combination of any of the preceding entities or partial entities, or a data center that implements parts or all of the functionality of one or more of these entities, and so on. The radio network controller or core network node includes processing circuitry 1202 (e.g., which may include one or more processors), network interface 1204, and memory 1206. In some embodiments, processing circuitry 1202 executes instructions to provide some or all of the functionality described above as being provided by the network node, memory 1206 stores the instructions executed by processing circuitry 1202, and network interface 1204 communicates signals to any suitable node, such as a gateway, switch, router, Internet, Public Switched Telephone Network (PSTN), network nodes 115, radio network controllers or core network nodes, etc.

Processing circuitry 1202 may include any suitable combination of hardware and software implemented in one or more modules to execute instructions and manipulate data to perform some or all of the described functions of the radio network controller or core network node. In some embodiments, processing circuitry 1202 may include, for example, one or more computers, one or more central processing units (CPUs), one or more microprocessors, one or more applications, and/or other logic.

Memory 1206 is generally operable to store instructions, such as a computer program, software, an application including one or more of logic, rules, algorithms, code, tables, etc. and/or other instructions capable of being executed by a processor. Examples of memory 1206 include computer memory (for example, Random Access Memory (RAM) or Read Only Memory (ROM)), mass storage media (for example, a hard disk), removable storage media (for example, a Compact Disk (CD) or a Digital Video Disk (DVD)), and/or or any other volatile or non-volatile, non-transitory computer-readable and/or computer-executable memory devices that store information.

In some embodiments, network interface 1204 is communicatively coupled to processing circuitry 1202 and may refer to any suitable device operable to receive input for the network node, send output from the network node, perform suitable processing of the input or output or both, communicate to other devices, or any combination of the preceding. Network interface 804 may include appropriate hardware (e.g., port, modem, network interface card, etc.) and software, including protocol conversion and data processing capabilities, to communicate through a network.

Other embodiments of the network node may include additional components beyond those shown in FIGURE 12 that may be responsible for providing certain aspects of the network node's functionality, including any of the functionality described above and/or any additional functionality (including any functionality necessary to support the solution described above).

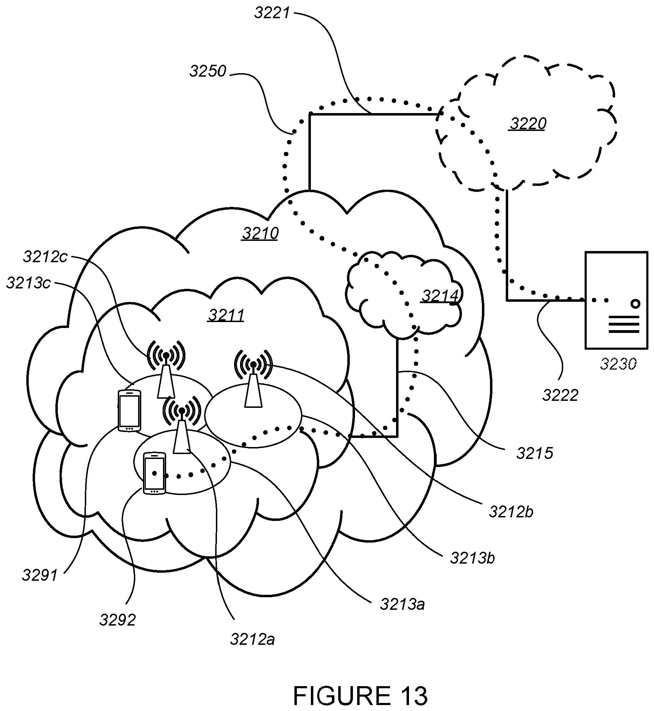

FIGURE 13 schematically illustrates a telecommunication network connected via an intermediate network to a host computer, according to certain embodiments. In accordance with an embodiment, a communication system includes a telecommunication network 3210, such as a 3GPP-type cellular network, which comprises an access network 3211, such as a radio access network, and a core network 3214. The access network 3211 comprises a plurality of base stations 3212a, 3212b, 3212c, such as NBs, eNBs, gNBs or other types of wireless access points, each defining a corresponding coverage area 3213a, 3213b, 3213c. Each base station 3212a, 3212b, 3212c is connectable to the core network 3214 over a wired or wireless connection 3215. A first user equipment (UE) 3291 located in coverage area 3213c is configured to wirelessly connect to, or be paged by, the corresponding base station 3212c. A second UE 3292 in coverage area 3213a is wirelessly connectable to the corresponding base station 3212a. While a plurality of UEs 3291, 3292 are illustrated in this example, the disclosed embodiments are equally applicable to a situation where a sole UE is in the coverage area or where a sole UE is connecting to the corresponding base station 3212.

The telecommunication network 3210 is itself connected to a host computer 3230, which may be embodied in the hardware and/or software of a standalone server, a cloud-implemented server, a distributed server or as processing resources in a server farm. The host computer 3230 may be under the ownership or control of a service provider, or may be operated by the service provider or on behalf of the service provider. The connections 3221, 3222 between the telecommunication network 3210 and the host computer 3230 may extend directly from the core network 3214 to the host computer 3230 or may go via an optional intermediate network 3220. The intermediate network 3220 may be one of, or a combination of more than one of, a public, private or hosted network; the intermediate network 3220, if any, may be a backbone network or the Internet; in particular, the intermediate network 3220 may comprise two or more sub-networks (not shown).

The communication system of FIGURE 13 as a whole enables connectivity between one of the connected UEs 3291, 3292 and the host computer 3230. The connectivity may be described as an over-the-top (OTT) connection 3250. The host computer 3230 and the connected UEs 3291, 3292 are configured to communicate data and/or signaling via the OTT connection 3250, using the access network 3211, the core network 3214, any intermediate network 3220 and possible further infrastructure (not shown) as intermediaries. The OTT connection 3250 may be transparent in the sense that the participating communication devices through which the OTT connection 3250 passes are unaware of routing of uplink and downlink communications. For example, a base station 3212 may not or need not be informed about the past routing of an incoming downlink communication with data originating from a host computer 3230 to be forwarded (e.g., handed over) to a connected UE 3291. Similarly, the base station 3212 need not be aware of the future routing of an outgoing uplink communication originating from the UE 3291 towards the host computer 3230.

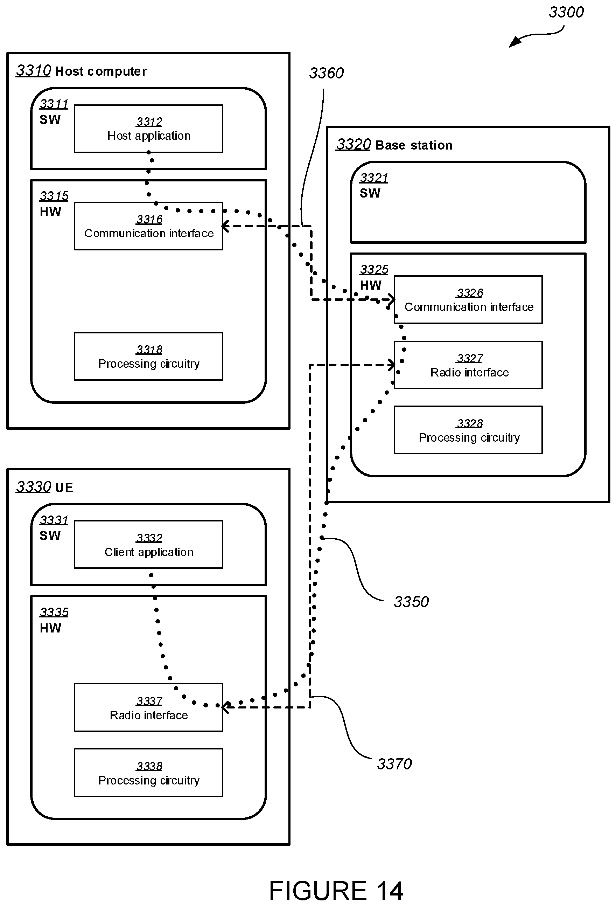

FIGURE 14 is a generalized block diagram of a host computer communicating via a base station with a user equipment over a partially wireless connection, according to certain embodiments. Example implementations, in accordance with an embodiment, of the UE, base station and host computer discussed in the preceding paragraphs will now be described with reference to FIGURE 14. In a communication system 3300, a host computer 3310 comprises hardware 3315 including a communication interface 3316 configured to set up and maintain a wired or wireless connection with an interface of a different communication device of the communication system 3300. The host computer 3310 further comprises processing circuitry 3318, which may have storage and/or processing capabilities. In particular, the processing circuitry 3318 may comprise one or more programmable processors, application-specific integrated circuits, field programmable gate arrays or combinations of these (not shown) adapted to execute instructions. The host computer 3310 further comprises software 3311, which is stored in or accessible by the host computer 3310 and executable by the processing circuitry 3318. The software 3311 includes a host application 3312. The host application 3312 may be operable to provide a service to a remote user, such as a UE 3330 connecting via an OTT connection 3350 terminating at the UE 3330 and the host computer 3310. In providing the service to the remote user, the host application 3312 may provide user data which is transmitted using the OTT connection 3350.

The communication system 3300 further includes a base station 3320 provided in a telecommunication system and comprising hardware 3325 enabling it to communicate with the host computer 3310 and with the UE 3330. The hardware 3325 may include a communication interface 3326 for setting up and maintaining a wired or wireless connection with an interface of a different communication device of the communication system 3300, as well as a radio interface 3327 for setting up and maintaining at least a wireless connection 3370 with a UE 3330 located in a coverage area (not shown in FIGURE 14) served by the base station 3320. The communication interface 3326 may be configured to facilitate a connection 3360 to the host computer 3310. The connection 3360 may be direct or it may pass through a core network (not shown in FIGURE 14) of the telecommunication system and/or through one or more intermediate networks outside the telecommunication system. In the embodiment shown, the hardware 3325 of the base station 3320 further includes processing circuitry 3328, which may comprise one or more programmable processors, application-specific integrated circuits, field programmable gate arrays or combinations of these (not shown) adapted to execute instructions. The base station 3320 further has software 3321 stored internally or accessible via an external connection.

The communication system 3300 further includes the UE 3330 already referred to. Its hardware 3335 may include a radio interface 3337 configured to set up and maintain a wireless connection 3370 with a base station serving a coverage area in which the UE 3330 is currently located. The hardware 3335 of the UE 3330 further includes processing circuitry 3338, which may comprise one or more programmable processors, application-specific integrated circuits, field programmable gate arrays or combinations of these (not shown) adapted to execute instructions. The UE 3330 further comprises software 3331, which is stored in or accessible by the UE 3330 and executable by the processing circuitry 3338. The software 3331 includes a client application 3332. The client application 3332 may be operable to provide a service to a human or non-human user via the UE 3330, with the support of the host computer 3310. In the host computer 3310, an executing host application 3312 may communicate with the executing client application 3332 via the OTT connection 3350 terminating at the UE 3330 and the host computer 3310. In providing the service to the user, the client application 3332 may receive request data from the host application 3312 and provide user data in response to the request data. The OTT connection 3350 may transfer both the request data and the user data. The client application 3332 may interact with the user to generate the user data that it provides.

It is noted that the host computer 3310, base station 3320 and UE 3330 illustrated in FIGURE 14 may be identical to the host computer 3230, one of the base stations 3212a, 3212b, 3212c and one of the UEs 3291, 3292 of FIGURE 13, respectively. This is to say, the inner workings of these entities may be as shown in FIGURE 14 and independently, the surrounding network topology may be that of FIGURE 13.

In FIGURE 14, the OTT connection 3350 has been drawn abstractly to illustrate the communication between the host computer 3310 and the use equipment 3330 via the base station 3320, without explicit reference to any intermediary devices and the precise routing of messages via these devices. Network infrastructure may determine the routing, which it may be configured to hide from the UE 3330 or from the service provider operating the host computer 3310, or both. While the OTT connection 3350 is active, the network infrastructure may further take decisions by which it dynamically changes the routing (e.g., on the basis of load balancing consideration or reconfiguration of the network).

The wireless connection 3370 between the UE 3330 and the base station 3320 is in accordance with the teachings of the embodiments described throughout this disclosure. One or more of the various embodiments improve the performance of OTT services provided to the UE 3330 using the OTT connection 3350, in which the wireless connection 3370 forms the last segment. More precisely, the teachings of these embodiments may improve the data rate and/or latency and thereby provide benefits such as reduced user waiting time, relaxed restriction on file size, and/or better responsiveness.

A measurement procedure may be provided for the purpose of monitoring data rate, latency and other factors on which the one or more embodiments improve. There may further be an optional network functionality for reconfiguring the OTT connection 3350 between the host computer 3310 and UE 3330, in response to variations in the measurement results. The measurement procedure and/or the network functionality for reconfiguring the OTT connection 3350 may be implemented in the software 3311 of the host computer 3310 or in the software 3331 of the UE 3330, or both. In embodiments, sensors (not shown) may be deployed in or in association with communication devices through which the OTT connection 3350 passes; the sensors may participate in the measurement procedure by supplying values of the monitored quantities exemplified above, or supplying values of other physical quantities from which software 3311, 3331 may compute or estimate the monitored quantities. The reconfiguring of the OTT connection 3350 may include message format, retransmission settings, preferred routing etc.; the reconfiguring need not affect the base station 3320, and it may be unknown or imperceptible to the base station 3320. Such procedures and functionalities may be known and practiced in the art. In certain embodiments, measurements may involve proprietary UE signaling facilitating the host computer's 3310 measurements of throughput, propagation times, latency and the like. The measurements may be implemented in that the software 3311, 3331 causes messages to be transmitted, in particular empty or 'dummy' messages, using the OTT connection 3350 while it monitors propagation times, errors etc.

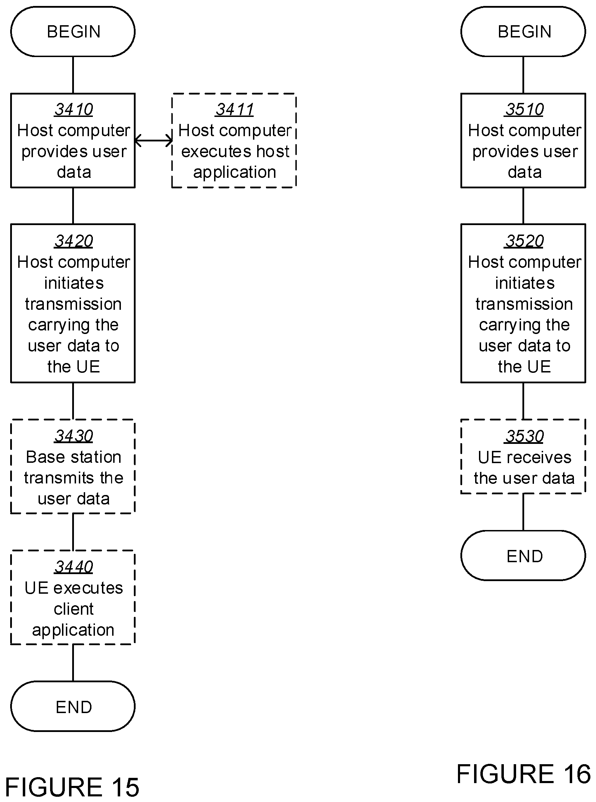

FIGURE 15 is a flowchart illustrating a method implemented in a communication system, in accordance with one embodiment. The communication system includes a host computer, a base station and a UE which may be those described with reference to FIGURES 13 and 14. For simplicity of the present disclosure, only drawing references to FIGURE 15 will be included in this section. In a first step 3410 of the method, the host computer provides user data. In an optional substep 3411 of the first step 3410, the host computer provides the user data by executing a host application. In a second step 3420, the host computer initiates a transmission carrying the user data to the UE. In an optional third step 3430, the base station transmits to the UE the user data which was carried in the transmission that the host computer initiated, in accordance with the teachings of the embodiments described throughout this disclosure. In an optional fourth step 3440, the UE executes a client application associated with the host application executed by the host computer.

FIGURE 16 is a flowchart illustrating a method implemented in a communication system, in accordance with one embodiment. The communication system includes a host computer, a base station and a UE which may be those described with reference to FIGURES 13 and 14. For simplicity of the present disclosure, only drawing references to FIGURE 16 will be included in this section. In a first step 3510 of the method, the host computer provides user data. In an optional substep (not shown) the host computer provides the user data by executing a host application. In a second step 3520, the host computer initiates a transmission carrying the user data to the UE. The transmission may pass via the base station, in accordance with the teachings of the embodiments described throughout this disclosure. In an optional third step 3530, the UE receives the user data carried in the transmission.

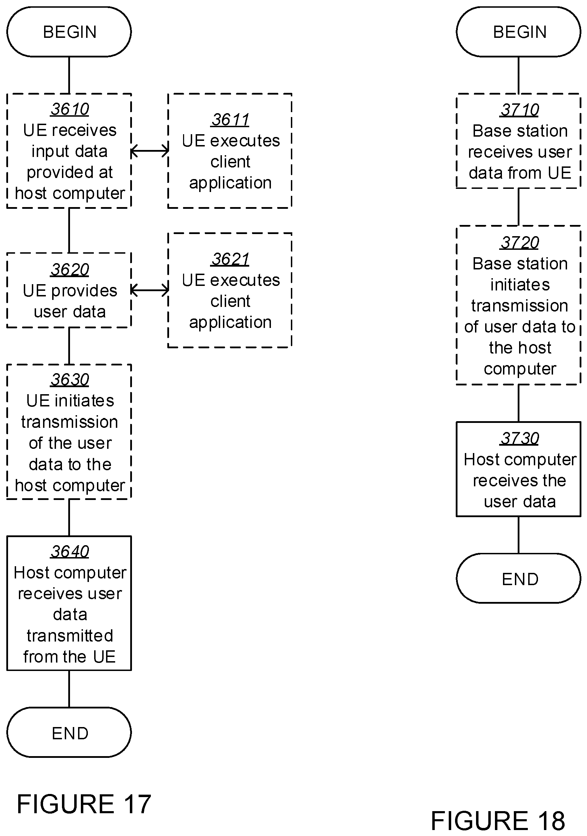

FIGURE 17 is a flowchart illustrating a method implemented in a communication system, in accordance with one embodiment. The communication system includes a host computer, a base station and a UE which may be those described with reference to FIGURES 13 and 14. For simplicity of the present disclosure, only drawing references to FIGURE 17 will be included in this section. In an optional first step 3610 of the method, the UE receives input data provided by the host computer. Additionally or alternatively, in an optional second step 3620, the UE provides user data. In an optional substep 3621 of the second step 3620, the UE provides the user data by executing a client application. In a further optional substep 3611 of the first step 3610, the UE executes a client application which provides the user data in reaction to the received input data provided by the host computer. In providing the user data, the executed client application may further consider user input received from the user. Regardless of the specific manner in which the user data was provided, the UE initiates, in an optional third substep 3630, transmission of the user data to the host computer. In a fourth step 3640 of the method, the host computer receives the user data transmitted from the UE, in accordance with the teachings of the embodiments described throughout this disclosure.

FIGURE 18 is a flowchart illustrating a method implemented in a communication system, in accordance with one embodiment. The communication system includes a host computer, a base station and a UE which may be those described with reference to FIGURES 13 and 14. For simplicity of the present disclosure, only drawing references to FIGURE 18 will be included in this section. In an optional first step 3710 of the method, in accordance with the teachings of the embodiments described throughout this disclosure, the base station receives user data from the UE. In an optional second step 3720, the base station initiates transmission of the received user data to the host computer. In a third step 3730, the host computer receives the user data carried in the transmission initiated by the base station.

### ADDITIONAL INFORMATION

In high frequency deployments, paging, like other signals have to be beamformed. Since, by the nature of the paging procedure, the location of the intended recipient is unknown, paging has to be transmitted in the form of beam sweeping in high frequencies. This creates a lot of control signalling overhead, especially since the paging signals typically have to be transmitted in multiple cells.

To combat this issue, a group paging concept has been proposed where the paging identifier is a shortened identifier associated with multiple UEs or a group of UEs. Since the paging identifier is non-UE unique, a UE receiving a paging indication containing its group paging identifier needs to contact the network to find out whether it is actually being paged or not. This concept is also known as response-driven paging, see R2-1708537, Response-driven paging to reduce beam sweeping overhead in NR, Ericsson, RAN2#98, 15th - 19th May 2017, for further details.

This disclosure discusses a proposal how to minimize the signalling overhead associated with response-driven paging.

As mentioned above, beam sweeping of paging can be a source of significant control signalling overhead, especially in deployments with a large number of DL beams, e.g. 64 beams.

The following documents address this concern by introducing the concept response-driven paging, whereby the initial DL message over the radio interface in the paging procedure is shortened by limiting the contents to short identifier(s), instead of UE unique paging identifier(s):
1. R2-168124, Paging in NR at HF operation, Nokia, Alcatel-Lucent Shanghai Bell, RAN2#96, 14th - 18th November 2016
2. R2-1702779, Configurable Paging Procedure for NR, Nokia, Alcatel-Lucent Shanghai Bell, RAN2#97bis, 3rd - 7th April 2017
3. R2-1708537, Response-driven paging to reduce beam sweeping overhead in NR, Ericsson, RAN2#98, 15th - 19th May 2017
4. R1-1708724, On NR paging design, Ericsson, RAN1#89, 15th - 19th May 2017

To this end, the response-driven paging concept introduces shorter paging identifiers, where multiple UEs can be assigned one and the same short paging identifier. Such a shortened identifier can be seen as a UE group identifier, which is referred to as a Paging Indicator (PI). The response-driven paging concept reduces the DL overhead by reducing the amount of data transmitted in the paging beam sweep (which can be a substantial gain when a large number of beams is used) at the expense of some increase of the UL signalling and DL signalling following possible response(s) from UE(s) receiving matching PI(s).

Each UE is explicitly or implicitly allocated a PI to look for in a paging indication. The first DL signal in the response-driven paging procedure is herein referred to as "paging indication" rather than "paging message" to distinguish it from a full-fledged paging message, which contains all the information a paged UE needs. Hence, when a UE receives a paging indication with a matching PI, it does not know whether it is itself or another UE with the same allocated PI that is the actual target of the page. To resolve this ambiguity, the UE contacts the network, which triggers the network to provide the additional paging information (e.g. the full UE paging identifier(s)) to the UE transmitted in a DL beam. Hence, the term "response-driven paging".

This ambiguity resolution has different forms in the contributions that have proposed response-driven paging. In R2-168124 and R2-1702779, the UE goes through a random access procedure to indicate its identity to the network, so that the network can respond to the UE whether it is targeted by the page or not. R2-1708537 proposes a more streamlined ambiguity resolution, which creates less total overhead (in particular the resulting increase of the UL overhead is smaller in this proposal), whereby the UE only transmits a (special, for this purpose) random access preamble which triggers the network to respond with a full paging message (i.e. including the full UE paging identifier(s)).

Common for both ambiguity resolution procedures is that the network is informed of the direction(s) in which the responding UE(s) can be reached, i.e., a responding UE implicitly "reports" its preferred DL beam direction. The essence of this implicit DL beam reporting is that the network can derive the DL beam direction from the PRACH resource (and possibly preamble) used when the UE contacts the network (or from the angle of arrival if the gNB supports directional reciprocity).

When responding to a paging indication, a UE implicitly "reports" its preferred DL beam direction, i.e. the network is informed of the direction in which to transmit the additional paging information to the UE.

Since the PI is non-UE unique and thus ambiguous, multiple UEs, many of which not being the target of the paging, may respond to a paging indication. The number of responding UEs will depend on the number of listening UEs and the size of the PI in relation to a full UE paging identifier. In some scenarios, the number of responding UEs may be large enough to be seen as an issue which causes the network to have to transmit the additional paging information in so many beam directions that this overhead becomes significant, reducing the gain of the response-driven paging concept as such. While the size of the PI can be adapted depending on signalling load in the cell (e.g. if the PI is based on a truncated UE ID), the number of UEs and the locations (positions) of the UEs within the cell cannot be influenced.

The number of DL beam directions the network has to transmit additional paging information depend on the number of responding UEs, which in turn depend on the number of listening UEs, the fraction of them that have a matching PI and their locations in the cell. The fraction of the listening UEs that have a matching PI can be impacted by varying the size of the PI in relation to a full UE paging identifier, but the number of UEs and their locations in the cell cannot be influenced.

In some scenarios, the number of DL beam directions the network has to transmit additional paging information in may be undesirably large, thereby reducing the gain of the response-driven paging.

R2-1710985, Discussion on response beam selection in indication-based paging, ASTRI, TCL Communication Ltd, RAN2#99bis, 9th - 13th October 2017: Observation 5 addresses this potential issue by proposing to study how to "minimize the number of the distinct responded [SS Block] beams" (i.e. the "reported" preferred DL beams) and then the contribution also proposes a scheme which tends to gather the reported preferred DL beam directions in a few selected "prioritized" directions. The essence of the proposed scheme is that a UE does not only identify its preferred DL beam, but all DL beams that are acceptable according to a given threshold, i.e. which are good enough for transmission of additional paging information. If any of the acceptable beams is a prioritized beam, the prioritized beam is reported, irrespective of whether it is the best beam or not. This creates a bias towards reporting prioritized beams and hence the responding UEs should with this proposal report fewer beams in total, thereby reducing the number of DL beam directions the network has to transmit the additional paging information in. Because of this property, this optimizing concept may be referred to as "response beam aggregation".

Mechanisms can be considered to reduce the number of DL beam directions to transmit additional paging information in, e.g. by finding beam directions that can reach more than one of the responding UEs with a single beam. Such a concept may be referred to as "response beam aggregation".

Although we recognize the merits of response beam aggregation as such, we see that the scheme proposed in R2-1710985 [6] comes with some disadvantages too and that the possibility to utilize overlaps in different UEs sets of acceptable DL beams for response beam aggregation has greater potential. For instance, two responding UEs with overlapping sets of acceptable DL beams could be "pulled" to different prioritized beams for their respective response, with the result that the overlap is invisible for the gNB and no response beam aggregation is achieved. A similar effect may result if a UE's set of acceptable beams does not include any prioritized beam, in which case the UE instead has to report the best beam in the set.

With the response beam aggregation method proposed in R2-1710985 the network may fail to utilize overlaps in different responding UEs' respective sets of acceptable DL beams.

To avoid failure to leverage overlaps in different UE's sets of acceptable beams, because the overlaps are hidden to the network, a different approach could be that each responding UE reports its actual set of acceptable beams, so that the network can identify the response beam aggregation choice that minimizes the number of response beams.

If each responding UE reports its set of acceptable DL beams, no response beam aggregation opportunities would be missed and the network could minimize the number of response beams.

Proposal 1: RAN2 should investigate the feasibility and effectiveness of a response beam aggregation method based on that the responding UEs report their respective sets of acceptable DL beams in conjunction with response-driven paging.

As we are in favour of using only a random access preamble to indicate a detected PI match (in line with or contribution R2-1708537 where the preamble triggers the gNB to return a list of the paged UE IDs to the UE transmitting the preamble), we think that a preamble based way of indicating a UE's set of acceptable DL beams could be a way forward.

Proposal 2: Preamble based reporting of a UE's set of acceptable DL beams should be considered as the basis for response beam aggregation in conjunction with response-driven paging.

In conclusion, we made the following observations:
Observation 1:When responding to a paging indication, a UE implicitly "reports" its preferred DL beam direction, i.e. the network is informed of the direction in which to transmit the additional paging information to the UE.
Observation 2: The number of DL beam directions the network has to transmit additional paging information depend on the number of responding UEs, which in turn depend on the number of listening UEs, the fraction of them that have a matching PI and their locations in the cell. The fraction of the listening UEs that have a matching PI can be impacted by varying the size of the PI in relation to a full UE paging identifier, but the number of UEs and their locations in the cell cannot be influenced.
Observation 3:In some scenarios, the number of DL beam directions the network has to transmit additional paging information in may be undesirably large, thereby reducing the gain of the response-driven paging.
Observation 4: Mechanisms can be considered to reduce the number of DL beam directions to transmit additional paging information in, e.g. by finding beam directions that can reach more than one of the responding UEs with a single beam. Such a concept may be referred to as "response beam aggregation".
Observation 5:With the response beam aggregation method proposed in R2-1710985 the network may fail to utilize overlaps in different responding UEs' respective sets of acceptable DL beams.
Observation 6:If each responding UE reports its set of acceptable DL beams, no response beam aggregation opportunities would be missed and the network could minimize the number of response beams.

### ABBREVIATIONS

| Abbreviation | Explanation |
|---|---|
| 3GPP | 3^{rd} Generation Partnership Project |
| 5G | 5^{th} Generation |
| 5GC | 5G Core network |
| AoA | Angle of Arrival |
| CN | Core Network |
| DL | Downlink |
| DoA | Direction of Arrival |
| DRX | Discontinuous Reception |
| eNB | Evolved NodeB |
| ETWS | Earthquake and Tsunami Warning System |
| EUTRAN | Evolved Universal Terrestrial Access Network |
| gNB | The term for a radio base station in NR (corresponding to eNB in LTE). |
| HF | High Frequency/High Frequencies |
| ID | Identity/Identifier |
| IMSI | International Mobile Subscriber Identity |
| LTE | Long Term Evolution |
| MIB | Master Information Block |
| NR | New Radio (The term used for the 5G radio interface and radio access network in the technical reports and standard specifications 3GPP are working on.) |
| PDCCH | Physical Downlink Control Channel |
| PDSCH | Physical Downlink Shared Channel |
| PI | Paging Indicator |
| PO | Paging Occasion |
| PRACH | Physical Random Access Channel |
| P-RNTI | Paging RNTI |
| PSS | Primary Synchronization Signal |
| RAN | Radio Access Network |
| RNA | RAN Notification Area |
| RNTI | Radio Network Temporary Identifier |
| RRC | Radio Resource Control |
| RSRP | Reference Signal Received Power |
| RSRQ | Reference Signal Received Quality |
| SAE | System Architecture Evolution |
| SFN | Single Frequency Network |
| SINR | Signal to Interference and Noise Ratio |
| SNR | Signal to Noise Ratio |
| SS | Synchronization Signal |
| SSS | Secondary Synchronization Signal |
| S-TMSI | SAE-TMSI |
| TMSI | Temporary Mobile Subscriber Identity |
| TRP | Transmission/Reception Point |
| UE | User Equipment |
| UL | Uplink |

Modifications, additions, or omissions may be made to the systems and apparatuses described herein without departing from the scope of the disclosure. The components of the systems and apparatuses may be integrated or separated. Moreover, the operations of the systems and apparatuses may be performed by more, fewer, or other components. Additionally, operations of the systems and apparatuses may be performed using any suitable logic comprising software, hardware, and/or other logic. As used in this document, "each" refers to each member of a set or each member of a subset of a set.

Modifications, additions, or omissions may be made to the methods described herein without departing from the scope of the disclosure. The methods may include more, fewer, or other steps. Additionally, steps may be performed in any suitable order.

Although this disclosure has been described in terms of certain embodiments, alterations and permutations of the embodiments will be apparent to those skilled in the art. Accordingly, the above description of the embodiments does not constrain this disclosure. Other changes, substitutions, and alterations are possible without departing from scope of this disclosure as defined by the appended claims.

## Claims

1. A method by a wireless device for reporting acceptable downlink, DL, beam directions to a network node, wherein an acceptable DL beam is a beam in which the wireless device can receive from the network node, the method comprising:
receiving (302), from the network node, a paging indication;
determining (302) that a user equipment identifier, ID, associated with the paging indication matches a UE ID assigned to the wireless device;
in response thereto, identifying (304, 502) a plurality of acceptable DL beam directions;
selecting (306) a random access preamble dedicated for reporting sets of acceptable DL beam directions based at least in part on the plurality of acceptable DL beam directions identified by the wireless device,
transmitting (308, 504), to the network node, an indicator of the plurality of acceptable DL beam directions; wherein the indicator of the plurality of acceptable DL beam directions is transmitted to the network node using the selected random access preamble; and
receiving (310, 506), on one of the DL beam directions in the plurality of acceptable DL beam directions, paging information from the network node.

2. The method of Claim 1, further comprising:
selecting a PRACH resource based at least in part on the plurality of acceptable DL beam directions identified by the wireless device,
wherein the indicator of the plurality of acceptable DL beam directions consists at least partly of the selected PRACH resource.

3. The method of any one of Claims 1 to 2, further comprising determining that each DL beam direction in the plurality of acceptable DL beam directions provides the wireless device with a channel quality above a threshold.

4. The method of Claim 3, wherein the channel quality is measured by at least one of:
a Reference Signal Received Power, RSRP,
a Reference Signal Received Quality, RSRQ,
Signal to Noise Ratio, SNR, and
Signal to Interference and Noise Ratio, SINR.

5. The method of any one of Claims 3 to 4, further comprising receiving, from the network node, the threshold as system information.

6. The method of Claim 3, wherein the threshold is a threshold used for cell quality derivation, and wherein an offset is applied to the threshold before using the threshold to determine each DL beam direction that provides the wireless device with the channel quality above the threshold.

7. The method of any one of Claims 1 to 6, wherein the paging indication comprises a truncated user equipment identifier, UE ID, associated with the wireless device.

8. A computer program product comprising a non-transitory computer readable medium storing computer readable program code, the computer readable program code comprises program code for performing any of the methods of Claims 1 to 7.

9. A wireless device for reporting acceptable downlink, DL, beam directions or DL beams to a network node, wherein an acceptable DL beam is a beam in which the wireless device can receive from the network node, the wireless device comprising:
memory (230) operable to store instructions; and
processing circuitry (220) operable to execute the instructions to cause the wireless device to:
receive, from the network node, a paging indication;
determine that a user equipment identifier, ID, associated with the paging indication matches a UE ID assigned to the wireless device;
in response thereto, identify a plurality of acceptable DL beam directions;
select a random access preamble dedicated for reporting sets of acceptable DL beam directions based at least in part on the plurality of acceptable DL beam directions identified by the wireless device,
wherein the indicator of the plurality of acceptable DL beam directions is transmitted to the network node using the selected random access preamble;
transmit, to the network node, an indicator of the plurality of acceptable DL beam directions; and
receive, on one of the DL beam directions in the plurality of acceptable DL beam directions, paging information from the network node.

10. A method by a network node for determining acceptable downlink, DL, beam directions in which to transmit a message to one or more wireless devices, wherein an acceptable DL beam is a beam in which the wireless device can receive from the network node, the method comprising:
transmitting, to one or more the wireless devices, a paging indication associated with a user equipment identifier, UEID, that matches a UEID assigned to the one or more wireless devices;
receiving (802, 1002) an indicator from the one or more wireless devices; wherein the receiving the indicator comprises receiving a message transmitted by the one or more wireless devices using a random access preamble; based on the indicator from the one or more wireless devices, determining (804, 1004) a plurality of acceptable DL beam directions for transmitting paging information to the one or more wireless devices; wherein the determining the plurality of acceptable DL beam directions comprises determining the plurality of acceptable DL beam directions based on the random access preamble; and
wherein receiving the indicator from the one or more wireless devices further comprises: receiving a first indicator from a first wireless device, the first indicator indicating a plurality of acceptable DL beam directions of the first wireless device; and receiving a second indicator from a second wireless device, the second indicator indicating a plurality of acceptable DL beam directions of the second wireless device;
wherein determining the plurality of acceptable DL beam directions for transmitting paging information to the one or more wireless devices comprises:
determining a first plurality of acceptable DL beam directions for transmitting paging information to the first wireless device, and
determining a second plurality of acceptable DL beam directions for transmitting paging information to the second wireless device; and
wherein the method further comprises:
determining that the one of the DL beam directions in which the response message is transmitted is in the first plurality of acceptable DL beam directions and the second plurality of DL beam directions, and
selecting the one of the DL beam directions for transmitting the response message to minimize a number of DL beam directions required to reach the first and second wireless devices; and
transmitting (810, 1006) a response message containing the paging information to the one or more wireless devices in one of the DL beam directions in the plurality of acceptable DL beam directions.

11. The method of Claim 10, further comprising:
based on the indication from the one or more wireless devices, determining a best DL beam direction in the plurality of DL beam directions, wherein the best DL beam direction provides the one or more wireless devices with a best channel quality of the plurality of DL beams associated with the network node, and
wherein the one of the DL beam directions on which the paging information is transmitted is the best beam DL beam direction, or is not the best beam DL beam direction.

12. The method of any one of Claims 10 to 11, wherein each DL beam direction in the plurality of acceptable DL beam directions provides the one or more wireless devices with a channel quality above a threshold, the method further comprising transmitting, to the one or more wireless devices, the threshold as system information.

13. A network node for determining acceptable downlink, DL, beam directions in which to transmit a message to one or more wireless device, wherein an acceptable DL beam is a beam in which the wireless device can receive from the network node, the network node comprising:
memory (730) operable to store instructions; and
processing circuitry (720) operable to execute the instructions to cause the network node to:
transmit, to one or more the wireless devices, a paging indication associated with a user equipment identifier, UEID, that matches a UEID assigned to the one or more wireless devices;
receive an indicator from the one or more wireless devices; wherein said receive the indicator comprises receiving a message transmitted by the one or more wireless devices using a random access preamble;
based on the indicator from the one or more wireless devices, determine the plurality of acceptable DL beam directions for transmitting paging information to the one or more wireless devices; wherein said determine the plurality of acceptable DL beam directions comprises determining the plurality of acceptable DL beam directions based on the random access preamble; and
wherein receive the indicator from the one or more wireless devices further comprises: receiving a first indicator from a first wireless device; and receiving a second indicator from a second wireless device;
wherein determine the plurality of acceptable DL beam directions for transmitting paging information to the one or more wireless devices comprises:
determining a first plurality of acceptable DL beam directions for transmitting paging information to the first wireless device, and
determining a second plurality of acceptable DL beam directions for transmitting paging information to the second wireless device; and
wherein the processing circuitry (720) is further operable to execute the instructions to cause the network node to:
determine that the one of the DL beam directions in which the response message is transmitted is in the first plurality of acceptable DL beam directions and the second plurality of DL beam directions, and
select the one of the DL beam directions for transmitting the response message to minimize a number of DL beam directions required to reach the first and second wireless devices; and
transmit a response message containing the paging information to the one or more wireless devices in one of the DL beam directions in the plurality of acceptable DL beam directions.

## Patentansprüche

1. Verfahren einer drahtlosen Vorrichtung zum Melden akzeptabler Downlink-Strahlrichtungen, DL-Strahlrichtungen, an einen Netzwerkknoten, wobei ein akzeptabler DL-Strahl ein Strahl ist, in dem die drahtlose Vorrichtung von dem Netzwerkknoten empfangen kann, wobei das Verfahren Folgendes umfasst:
Empfangen (302), von dem Netzwerkknoten, einer Funkrufanzeige;
Bestimmen (302), dass eine Benutzereinrichtungskennung, Benutzereinrichtungs-ID, die der Funkrufanzeige zugeordnet ist, einer UE-ID entspricht, die der drahtlosen Vorrichtung zugewiesen ist;
als Antwort darauf, Identifizieren (304, 502) einer Vielzahl von akzeptablen DL-Strahlrichtungen;
Auswählen (306) einer Direktzugriffspräambel, die zum Melden von Sätzen von akzeptablen DL-Strahlrichtungen dediziert ist, mindestens zum Teil basierend auf der Vielzahl von akzeptablen DL-Strahlrichtungen, die durch die drahtlose Vorrichtung identifiziert werden,
Übertragen (308, 504), an den Netzwerkknoten, eines Indikators der Vielzahl von akzeptablen DL-Strahlrichtungen; wobei der Indikator der Vielzahl von akzeptablen DL-Strahlrichtungen unter Verwendung der ausgewählten Direktzugriffspräambel an den Netzwerkknoten übertragen wird; und
Empfangen (310, 506), auf einer der DL-Strahlrichtungen in der Vielzahl von akzeptablen DL-Strahlrichtungen, von Funkrufinformationen von dem Netzwerkknoten.

2. Verfahren nach Anspruch 1, ferner umfassend:
Auswählen einer PRACH-Ressource mindestens teilweise basierend auf der Vielzahl von akzeptablen DL-Strahlrichtungen, die durch die drahtlose Vorrichtung identifiziert werden,
wobei der Indikator der Vielzahl von akzeptablen DL-Strahlrichtungen mindestens teilweise aus der ausgewählten PRACH-Ressource besteht.

3. Verfahren nach einem der Ansprüche 1 bis 2, ferner umfassend Bestimmen, dass jede DL-Strahlrichtung in der Vielzahl von akzeptablen DL-Strahlrichtungen der drahtlosen Vorrichtung eine Kanalqualität oberhalb eines Schwellenwerts bereitstellt.

4. Verfahren nach Anspruch 3, wobei die Kanalqualität mindestens durch eines des Folgenden gemessen wird:
eine Empfangsleistung des Referenzsignals, RSRP,
eine Empfangsqualität des Referenzsignals, RSRQ,
ein Signal-Rausch-Verhältnis, SNR, und
ein Signal-Interferenz-und-Rausch-Verhältnis, SINR.

5. Verfahren nach einem der Ansprüche 3 bis 4, ferner umfassend Empfangen, von dem Netzwerkknoten, des Schwellenwerts als Systeminformationen.

6. Verfahren nach Anspruch 3, wobei der Schwellenwert ein Schwellenwert ist, der für Zellqualitätsableitung verwendet wird, und wobei ein Versatz auf den Schwellenwert angewendet wird, bevor der Schwellenwert dazu verwendet wird, jede DL-Strahlrichtung, welche der drahtlosen Vorrichtung die Kanalqualität oberhalb des Schwellenwerts bereitstellt, zu bestimmen.

7. Verfahren nach einem der Ansprüche 1 bis 6, wobei die Funkrufanzeige eine verkürzte Benutzereinrichtungskennung, UE-ID, umfasst, die der drahtlosen Vorrichtung zugeordnet ist.

8. Computerprogrammprodukt, umfassend ein nichttransitorisches computerlesbares Medium, das einen computerlesbaren Programmcode speichert, wobei der computerlesbare Programmcode einen Programmcode zum Durchführen eines beliebigen der Verfahren nach den Ansprüchen 1 bis 7 umfasst.

9. Drahtlose Vorrichtung zum Melden akzeptabler Downlink-Strahlrichtungen, DL-Strahlrichtungen, oder DL-Strahlen an einen Netzwerkknoten, wobei ein akzeptabler Downlink-Strahl ein Strahl ist, in dem die drahtlose Vorrichtung von dem Netzwerkknoten empfangen kann, wobei die drahtlose Vorrichtung Folgendes umfasst:
einen Speicher (230), der dazu betreibbar ist, Anweisungen zu speichern; und
eine Verarbeitungsschaltung (220), die dazu betreibbar ist, die Anweisungen auszuführen, um die drahtlose Vorrichtung zu Folgendem zu veranlassen:
Empfangen, von dem Netzwerkknoten, einer Funkrufanzeige;
Bestimmen, dass eine Benutzereinrichtungskennung, Benutzereinrichtungs-ID, die der Funkrufanzeige zugeordnet ist, einer UE-ID entspricht, die der drahtlosen Vorrichtung zugewiesen ist;
als Antwort darauf, Identifizieren einer Vielzahl von akzeptablen DL-Strahlrichtungen;
Auswählen einer Direktzugriffspräambel, die zum Melden von Sätzen von akzeptablen DL-Strahlrichtungen dediziert ist, mindestens zum Teil basierend auf der Vielzahl von akzeptablen DL-Strahlrichtungen, die durch die drahtlose Vorrichtung identifiziert werden,
wobei der Indikator der Vielzahl von akzeptablen DL-Strahlrichtungen unter Verwendung der ausgewählten Direktzugriffspräambel an den Netzwerkknoten übertragen wird;
Übertragen, an den Netzwerkknoten, eines Indikators der Vielzahl von akzeptablen DL-Strahlrichtungen; und
Empfangen, auf einer der DL-Strahlrichtungen in der Vielzahl von akzeptablen DL-Strahlrichtungen, von Funkrufinformationen von dem Netzwerkknoten.

10. Verfahren eines Netzwerkknotens zum Bestimmen akzeptabler Downlink-Strahlrichtungen, DL-Strahlrichtungen, in denen eine Nachricht an eine oder mehrere drahtlose Vorrichtungen zu übertragen ist, wobei ein akzeptabler DL-Strahl ein Strahl ist, in dem die drahtlose Vorrichtung von dem Netzwerkknoten empfangen kann, wobei das Verfahren Folgendes umfasst:
Übertragen, an eine oder mehrere der drahtlosen Vorrichtungen, einer Funkrufanzeige, die einer Benutzereinrichtungskennung, UEID, zugeordnet ist, die einer UEID entspricht, die der einen oder den mehreren drahtlosen Vorrichtungen zugewiesen ist;
Empfangen (802, 1002) eines Indikators von der einen oder den mehreren drahtlosen Vorrichtungen; wobei das Empfangen des Indikators Empfangen einer Nachricht umfasst, die durch die eine oder die mehreren drahtlosen Vorrichtungen unter Verwendung einer Direktzugriffspräambel übertragen wurde; basierend auf dem Indikator von der einen oder den mehreren drahtlosen Vorrichtungen, Bestimmen (804, 1004) einer Vielzahl von akzeptablen DL-Strahlrichtungen zum Übertragen von Funkrufinformationen an die eine oder die mehreren drahtlosen Vorrichtungen; wobei das Bestimmen der Vielzahl von akzeptablen DL-Strahlrichtungen Bestimmen der Vielzahl von akzeptablen DL-Strahlrichtungen basierend auf der Direktzugriffspräambel umfasst; und
wobei das Empfangen des Indikators von der einen oder den mehreren drahtlosen Vorrichtungen ferner Folgendes umfasst: Empfangen eines ersten Indikators von einer ersten drahtlosen Vorrichtung, wobei der erste Indikator eine Vielzahl von akzeptablen DL-Strahlrichtungen der ersten drahtlosen Vorrichtung anzeigt;
und Empfangen eines zweiten Indikators von einer zweiten drahtlosen Vorrichtung, wobei der zweite Indikator eine Vielzahl von akzeptablen DL-Strahlrichtungen der zweiten drahtlosen Vorrichtung anzeigt;
wobei das Bestimmen der Vielzahl von akzeptablen DL-Strahlrichtungen zum Übertragen von Funkrufinformationen an die eine oder die mehreren drahtlosen Vorrichtungen Folgendes umfasst:
Bestimmen einer ersten Vielzahl von akzeptablen DL-Strahlrichtungen zum Übertragen von Funkrufinformationen an die erste drahtlose Vorrichtung und
Bestimmen einer zweiten Vielzahl von akzeptablen DL-Strahlrichtungen zum Übertragen von Funkrufinformationen an die zweite drahtlose Vorrichtung; und
wobei das Verfahren ferner Folgendes umfasst:
Bestimmen, dass die eine der DL-Strahlrichtungen, in der die Antwortnachricht übertragen wird, sich in der ersten Vielzahl von akzeptablen DL-Strahlrichtungen und der zweiten Vielzahl von DL-Strahlrichtungen befindet, und
Auswählen der einen der DL-Strahlrichtungen zum Übertragen der Antwortnachricht, um eine Anzahl von DL-Strahlrichtungen, die dazu benötigt werden, um die erste und die zweite drahtlose Vorrichtung zu erreichen, zu minimieren; und
Übertragen (810, 1006) einer Antwortnachricht, welche die Funkrufinformationen an die eine oder die mehreren drahtlosen Vorrichtungen in einer der DL-Strahlrichtungen in der Vielzahl von akzeptablen DL-Strahlrichtungen enthält.

11. Verfahren nach Anspruch 10, ferner umfassend:
basierend auf der Anzeige von der einen oder den mehreren drahtlosen Vorrichtungen, Bestimmen einer besten DL-Strahlrichtung in der Vielzahl von DL-Strahlrichtungen, wobei die beste DL-Strahlrichtung der einen oder den mehreren drahtlosen Vorrichtungen eine beste Kanalqualität der Vielzahl von DL-Strahlen, die dem Netzwerkknoten zugeordnet sind, bereitstellt und
wobei die eine der DL-Strahlrichtungen, auf der die Funkrufinformationen übertragen werden, die DL-Strahlrichtung des besten Strahls ist oder nicht die DL-Strahlrichtung des besten Strahls ist.

12. Verfahren nach einem der Ansprüche 10 bis 11, wobei jede DL-Strahlrichtung in der Vielzahl von akzeptablen DL-Strahlrichtungen der einen oder den mehreren drahtlosen Vorrichtungen eine Kanalqualität oberhalb eines Schwellenwerts bereitstellt, wobei das Verfahren ferner Übertragen, an die eine oder die mehreren drahtlosen Vorrichtungen, des Schwellenwerts als Systeminformationen umfasst.

13. Netzwerkknoten zum Bestimmen akzeptabler Downlink-Strahlrichtungen, DL-Strahlrichtungen, in denen eine Nachricht an eine oder mehrere drahtlose Vorrichtungen zu übertragen ist, wobei ein akzeptabler DL-Strahl ein Strahl ist, in dem die drahtlose Vorrichtung von dem Netzwerkknoten empfangen kann, wobei der Netzwerkknoten Folgendes umfasst:
einen Speicher (730), der dazu betreibbar ist, Anweisungen zu speichern; und
eine Verarbeitungsschaltung (720), die dazu betreibbar ist, die Anweisungen auszuführen, um den Netzwerkknoten zu Folgendem zu veranlassen:
Übertragen, an eine oder mehrere der drahtlosen Vorrichtungen, einer Funkrufanzeige, die einer Benutzereinrichtungskennung, UEID, zugeordnet ist, die einer UEID entspricht, die der einen oder den mehreren drahtlosen Vorrichtungen zugewiesen ist;
Empfangen eines Indikators von der einen oder den mehreren drahtlosen Vorrichtungen; wobei das Empfangen des Indikators Empfangen einer Nachricht umfasst, die durch die eine oder die mehreren drahtlosen Vorrichtungen unter Verwendung einer Direktzugriffspräambel übertragen wurde;
basierend auf dem Indikator von der einen oder den mehreren drahtlosen Vorrichtungen, Bestimmen der Vielzahl von akzeptablen DL-Strahlrichtungen zum Übertragen von Funkrufinformationen an die eine oder die mehreren drahtlosen Vorrichtungen; wobei das Bestimmen der Vielzahl von akzeptablen DL-Strahlrichtungen Bestimmen der Vielzahl von akzeptablen DL-Strahlrichtungen basierend auf der Direktzugriffspräambel umfasst; und
wobei das Empfangen des Indikators von der einen oder den mehreren drahtlosen Vorrichtungen ferner Folgendes umfasst: Empfangen eines ersten Indikators von einer ersten drahtlosen Vorrichtung; und Empfangen eines zweiten Indikators von einer zweiten drahtlosen Vorrichtung;
wobei das Bestimmen der Vielzahl von akzeptablen DL-Strahlrichtungen zum Übertragen von Funkrufinformationen an die eine oder die mehreren drahtlosen Vorrichtungen Folgendes umfasst:
Bestimmen einer ersten Vielzahl von akzeptablen DL-Strahlrichtungen zum Übertragen von Funkrufinformationen an die erste drahtlose Vorrichtung und
Bestimmen einer zweiten Vielzahl von akzeptablen DL-Strahlrichtungen zum Übertragen von Funkrufinformationen an die zweite drahtlose Vorrichtung; und
wobei die Verarbeitungsschaltung (720) ferner dazu betreibbar ist, die Anweisungen auszuführen, um den Netzwerkknoten zu Folgendem zu veranlassen:
Bestimmen, dass die eine der DL-Strahlrichtungen, in der die Antwortnachricht übertragen wird, sich in der ersten Vielzahl von akzeptablen DL-Strahlrichtungen und der zweiten Vielzahl von DL-Strahlrichtungen befindet, und
Auswählen der einen der DL-Strahlrichtungen zum Übertragen der Antwortnachricht, um eine Anzahl von DL-Strahlrichtungen, die dazu benötigt werden, um die erste und die zweite drahtlose Vorrichtung zu erreichen, zu minimieren; und
Übertragen einer Antwortnachricht, welche die Funkrufinformationen an die eine oder die mehreren drahtlosen Vorrichtungen in einer der DL-Strahlrichtungen in der Vielzahl von akzeptablen DL-Strahlrichtungen enthält.

## Revendications

1. Procédé par un dispositif sans fil pour signaler des directions de faisceau de liaison descendante, DL, acceptable à un nœud de réseau, dans lequel un faisceau de DL acceptable est un faisceau dans lequel le dispositif sans fil peut recevoir à partir du nœud de réseau, le procédé comprenant :
la réception (302), en provenance du nœud de réseau, d'une indication de radiomessagerie ;
la détermination (302) qu'un identifiant d'équipement utilisateur, ID, associé à l'indication de radiomessagerie correspond à un ID d'UE attribué au dispositif sans fil ;
en réponse à cela, l'identification (304, 502) d'une pluralité de directions de faisceau de DL acceptable ;
la sélection (306) d'un préambule d'accès aléatoire dédié au rapport d'ensembles de directions de faisceau de DL acceptable sur la base au moins en partie de la pluralité de directions de faisceau de DL acceptable identifiées par le dispositif sans fil,
la transmission (308, 504), au nœud de réseau, d'un indicateur de la pluralité de directions de faisceau de DL acceptable ; dans lequel l'indicateur de la pluralité de directions de faisceau de DL acceptable est transmis au nœud de réseau à l'aide du préambule d'accès aléatoire sélectionné ; et
la réception (310, 506), sur une parmi les directions de faisceau de DL dans la pluralité de directions de faisceau de DL acceptable, d'informations de radiomessagerie provenant du nœud de réseau.

2. Procédé selon la revendication 1, comprenant en outre :
la sélection d'une ressource de PRACH sur la base d'au moins en partie sur la pluralité de directions de faisceau de DL acceptable identifiées par le dispositif sans fil,
dans lequel l'indicateur de la pluralité de directions de faisceau de DL acceptable est constitué au moins en partie de la ressource de PRACH sélectionnée.

3. Procédé selon l'une quelconque des revendications 1 à 2, comprenant en outre la détermination que chaque direction de faisceau de DL dans la pluralité de directions de faisceau de DL acceptable fournit au dispositif sans fil une qualité de canal supérieure à un seuil.

4. Procédé selon la revendication 3, dans lequel la qualité de canal est mesurée par au moins un élément parmi :
une puissance reçue de signal de référence, RSRP,
une qualité reçue de signal de référence, RSRQ,
Rapport signal sur bruit, SNR et
Rapport signal sur interférence et bruit, SINR.

5. Procédé selon l'une quelconque des revendications 3 à 4, comprenant en outre la réception, en provenance du nœud de réseau, du seuil en tant qu'informations de système.

6. Procédé selon la revendication 3, dans lequel le seuil est un seuil utilisé pour la dérivation de qualité de cellule, et dans lequel un décalage est appliqué au seuil avant d'utiliser le seuil pour déterminer chaque direction de faisceau de DL qui fournit au dispositif sans fil la qualité de canal au-dessus du seuil.

7. Procédé selon l'une quelconque des revendications 1 à 6, dans lequel l'indication de radiomessagerie comprend un identifiant d'équipement utilisateur, UEID, tronqué associé au dispositif sans fil.

8. Produit de programme informatique comprenant un support lisible par ordinateur non transitoire stockant un code de programme lisible par ordinateur, le code de programme lisible par ordinateur comprend un code de programme pour réaliser un quelconque des procédés des revendications 1 à 7.

9. Dispositif sans fil permettant de signaler des directions de faisceau de liaison descendante, DL, acceptable ou des faisceaux de DL à un nœud de réseau, dans lequel un faisceau de DL acceptable est un faisceau dans lequel le dispositif sans fil peut recevoir à partir du nœud de réseau, le dispositif sans fil comprenant :
une mémoire (230) pouvant fonctionner pour stocker des instructions ; et
un circuit de traitement (220) pouvant fonctionner pour exécuter les instructions pour amener le dispositif sans fil à :
recevoir, à partir du nœud de réseau, une indication de radiomessagerie ;
déterminer qu'un identifiant d'équipement utilisateur, ID, associé à l'indication de radiomessagerie correspond à un ID d'UE attribué au dispositif sans fil ;
en réponse à cela, identifier une pluralité de directions de faisceau de DL acceptable ;
sélectionner un préambule d'accès aléatoire dédié aux rapports d'ensembles de directions de faisceau de DL acceptable sur la base d'au moins en partie sur la pluralité de directions de faisceau de DL acceptable identifiées par le dispositif sans fil,
dans lequel l'indicateur de la pluralité de directions de faisceau de DL acceptable est transmis au nœud de réseau à l'aide du préambule d'accès aléatoire sélectionné ;
transmettre, au nœud de réseau, un indicateur de la pluralité de directions de faisceau de DL acceptable ; et
recevoir, sur une parmi les directions de faisceau de DL dans la pluralité de directions de faisceau de DL acceptable, des informations de radiomessagerie provenant du nœud de réseau.

10. Procédé utilisé par un nœud de réseau pour déterminer des directions de faisceau de liaison descendante, DL, acceptable dans lesquelles transmettre un message à un ou plusieurs dispositifs sans fil, dans lequel un faisceau de DL acceptable est un faisceau dans lequel le dispositif sans fil peut recevoir à partir du nœud de réseau, le procédé comprenant :
la transmission, à un ou plusieurs dispositifs sans fil, d'une indication de radiomessagerie associée à un identifiant d'équipement utilisateur, UEID, qui correspond à un UEID attribué à l'un ou plusieurs dispositifs sans fil ;
la réception (802, 1002) d'un indicateur provenant de l'un ou plusieurs dispositifs sans fil ; dans lequel la réception de l'indicateur comprend la réception d'un message transmis par l'un ou plusieurs dispositifs sans fil à l'aide d'un préambule d'accès aléatoire ; sur la base de l'indicateur provenant de l'un ou plusieurs dispositifs sans fil, la détermination (804, 1004) d'une pluralité de directions de faisceau de DL acceptable pour transmettre des informations de radiomessagerie à l'un ou plusieurs dispositifs sans fil ; dans lequel la détermination de la pluralité de directions de faisceau de DL acceptable comprend la détermination de la pluralité de directions de faisceau de DL acceptable sur la base du préambule d'accès aléatoire ; et
dans lequel la réception de l'indicateur provenant de l'un ou plusieurs dispositifs sans fil comprend en outre : la réception d'un premier indicateur provenant d'un premier dispositif sans fil, le premier indicateur indiquant une pluralité de directions de faisceau de DL acceptable du premier dispositif sans fil ;
et la réception d'un deuxième indicateur provenant d'un deuxième dispositif sans fil, le deuxième indicateur indiquant une pluralité de directions de faisceau de DL acceptable du deuxième dispositif sans fil ;
dans lequel la détermination de la pluralité de directions de faisceau de DL acceptable pour transmettre des informations de radiomessagerie à l'un ou plusieurs dispositifs sans fil comprend :
la détermination d'une première pluralité de directions de faisceau de DL acceptable pour transmettre des informations de radiomessagerie au premier dispositif sans fil, et
la détermination d'une deuxième pluralité de directions de faisceau de DL acceptable pour transmettre des informations de radiomessagerie au deuxième dispositif sans fil ; et
dans lequel le procédé comprend en outre :
la détermination que l'une des directions du faisceau de DL dans laquelle le message de réponse est transmis se trouve dans la première pluralité de directions de faisceau de DL acceptable et
la deuxième pluralité de directions de faisceau de DL, et la sélection de l'une des directions de faisceau de DL pour transmettre le message de réponse afin de minimiser un nombre de directions de faisceau de DL nécessaires pour atteindre les premier et deuxième dispositifs sans fil ; et
la transmission (810, 1006) d'un message de réponse contenant les informations de radiomessagerie à un ou plusieurs dispositifs sans fil dans une direction parmi les directions de faisceau de DL dans la pluralité de directions de faisceau de DL acceptable.

11. Procédé selon la revendication 10, comprenant en outre :
sur la base de l'indication provenant de l'un ou plusieurs dispositifs sans fil, la détermination d'une meilleure direction de faisceau de DL dans la pluralité de directions de faisceau de DL, dans lequel la meilleure direction de faisceau de DL fournit l'un ou plusieurs dispositifs sans fil d'une meilleure qualité de canal parmi la pluralité de faisceaux de DL associés au nœud de réseau, et
dans lequel l'une des directions de faisceau de DL sur laquelle les informations de radiomessagerie sont transmises est la meilleure direction de faisceau de DL, ou n'est pas la meilleure direction de faisceau de DL.

12. Procédé selon l'une quelconque des revendications 10 à 11, dans lequel chaque direction de faisceau de DL dans la pluralité de directions de faisceau de DL acceptable fournit à l'un ou plusieurs dispositifs sans fil d'une qualité de canal supérieure à un seuil, le procédé comprenant en outre la transmission, à l'un ou plusieurs dispositifs sans fil, du seuil en tant qu'informations système.

13. Nœud de réseau permettant de déterminer des directions de faisceau de liaison descendante, DL, acceptable pour transmettre un message à un ou plusieurs dispositifs sans fil, dans lequel un faisceau de DL acceptable est un faisceau dans lequel le dispositif sans fil peut recevoir à partir du nœud de réseau, le nœud de réseau comprenant :
une mémoire (730) pouvant fonctionner pour stocker des instructions ; et
un circuit de traitement (720) pouvant fonctionner pour exécuter les instructions pour amener le nœud de réseau à :
transmettre, à un ou plusieurs dispositifs sans fil, une indication de radiomessagerie associée à un identifiant d'équipement utilisateur, UEID, qui correspond à un UEID attribué à l'un ou plusieurs dispositifs sans fil ;
recevoir un indicateur provenant de l'un ou plusieurs dispositifs sans fil ; dans lequel ladite réception de l'indicateur comprend la réception d'un message transmis par l'un ou plusieurs dispositifs sans fil à l'aide d'un préambule d'accès aléatoire ;
sur la base de l'indicateur provenant de l'un ou plusieurs dispositifs sans fil, déterminer la pluralité de directions de faisceau de DL acceptable pour transmettre des informations de radiomessagerie à l'un ou plusieurs dispositifs sans fil ; dans lequel ladite détermination de la pluralité de directions de faisceau de DL acceptable comprend la détermination de la pluralité de directions de faisceau de DL acceptable sur la base du préambule d'accès aléatoire ; et
dans lequel la réception de l'indicateur provenant de l'un ou plusieurs dispositifs sans fil comprend en outre : la réception d'un premier indicateur provenant d'un premier dispositif sans fil ; et la réception d'un deuxième indicateur provenant d'un deuxième dispositif sans fil ;
dans lequel la détermination de la pluralité de directions de faisceau de DL acceptable pour transmettre des informations de radiomessagerie à l'un ou plusieurs dispositifs sans fil comprend :
la détermination d'une première pluralité de directions de faisceau de DL acceptable pour transmettre des informations de radiomessagerie au premier dispositif sans fil, et
la détermination d'une deuxième pluralité de directions de faisceau de DL acceptable pour transmettre des informations de radiomessagerie au deuxième dispositif sans fil ; et
dans lequel le circuit de traitement (720) peut fonctionner en outre pour exécuter les instructions pour amener le nœud de réseau à :
déterminer que l'une des directions de faisceau de DL dans laquelle le message de réponse est transmis se trouve dans la première pluralité de directions de faisceau de DL acceptable et dans la deuxième pluralité de directions de faisceau de DL, et
sélectionner l'une des directions de faisceau de DL pour transmettre le message de réponse afin de minimiser un nombre de directions de faisceau de DL requises pour atteindre les premier et deuxième dispositifs sans fil ; et
transmettre un message de réponse contenant les informations de radiomessagerie à l'un ou plusieurs dispositifs sans fil dans une direction parmi les directions de faisceau de DL dans la pluralité de directions de faisceau de DL acceptable.
